(19) Europäisches Patentamt
European Patent Office
Office européen des brevets

(11) EP 3 546 640 A1

(12) EUROPEAN PATENT APPLICATION
published in accordance with Art. 153(4) EPC

(43) Date of publication:
02.10.2019 Bulletin 2019/40

(51) Int Cl.:
D06M 11/76 (2006.01)
C08L 1/02 (2006.01)
D21H 17/70 (2006.01)
C01F 5/24 (2006.01)
D04H 1/413 (2012.01)

(21) Application number: 17873231.9

(22) Date of filing: 28.11.2017

(86) International application number:
PCT/JP2017/042614

(87) International publication number:
WO 2018/097312 (31.05.2018 Gazette 2018/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.11.2016 JP 2016230128
28.12.2016 JP 2016255144
02.02.2017 JP 2017017509

(71) Applicant: Nippon Paper Industries Co., Ltd.
Tokyo 114-0002 (JP)

(72) Inventors:
• SUGAWARA, Naoyuki
Tokyo 114-0002 (JP)
• OISHI, Masatoshi
Tokyo 114-0002 (JP)
• FUCHISE, Moe
Tokyo 114-0002 (JP)
• NAKATANI, Toru
Tokyo 114-0002 (JP)
• GOTO, Shisei
Tokyo 114-0002 (JP)

(74) Representative: Cockerton, Bruce Roger
Carpmaels & Ransford LLP
One Southampton Row
London WC1B 5HA (GB)

(54) COMPOSITE OF FIBER AND INORGANIC PARTICLES

(57) The present invention aims to provide products comprising a fiber complex of inorganic particles and a fiber. According to the present invention, products comprising a fiber complex of inorganic particles and a fiber and assuming the form of an aqueous suspension, a pulp, a sheet, a powder, a microsphere, a granule, a pellet, a molding, a yarn, or a foam are provided.

Fig. 2

**Description**

TECHNICAL FIELD

The present invention relates to products comprising a complex of a fiber and inorganic particles, as well as processes for preparing them. In particular, the present invention relates to products comprising a complex of a fiber and inorganic particles and assuming the form of an aqueous suspension, a pulp, a sheet, a powder, a microsphere, a granule, a pellet, a paste, a molding, a yarn, or a foam, as well as processes for preparing them.

BACKGROUND ART

Recent evidence has shown that a combination of a fiber and inorganic particles can provide a unique complex having the characteristics of both of the fiber and the inorganic particles.

For example, PTL 1 describes that when an inorganic compound is mixed with a microfibrous cellulose, the properties of the inorganic compound (thermal resistance, thermal conductivity, antimicrobial properties and the like) can be conferred while maintaining transparency, light transmission and light diffusion. As for a technique for precipitating inorganic particles on a fiber, PTL 2 describes a complex comprising crystalline calcium carbonate mechanically bonded on a fiber. PTL 3 describes a technique for preparing a complex of a pulp and calcium carbonate by precipitating calcium carbonate in a pulp suspension by the carbonation process. PTL 4 describes a method for removing or reducing hydrogen sulfide in absorptive products by using a particulate material adhered to a pulp fiber with a retention aid.

CITATION LIST

PATENT LITERATURE

PTL 1: JPA 2012-007247

PTL 2: JPA 1994-158585

PTL 3: US Patent No. 5679220

PTL 4: JPA 2005-48351

SUMMARY OF INVENTION

TECHNICAL PROBLEM

The present invention aims to provide products comprising a complex of a fiber and inorganic particles, as well as processes for preparing them. In particular, the present invention aims to provide products comprising a complex of a fiber and inorganic particles and assuming the form of an aqueous suspension, a pulp, a sheet, a powder, a yarn, a microsphere, a granule, a pellet, a paste, a molding, or a foam, as well as processes for preparing them.

SOLUTION TO PROBLEM

The present invention includes, but not limited to, the following:

(1) A product comprising a complex of a fiber and inorganic particles and assuming the form of an aqueous suspension, a pulp, a sheet, a powder, a microsphere, a granule, a pellet, a molding, a yarn, or a foam.
(2) The product as defined in (1), which is an aqueous suspension.
(3) The product as defined in (2), wherein the aqueous suspension has a percent moisture content of 90 % by mass or more and 99 % by mass or less.
(4) The product as defined in (1), which is a pulp.
(5) The product as defined in (4), wherein the pulp has a percent moisture content of 10 % by mass or more and less than 90 % by mass.
(6) The product as defined in (1), which is a sheet.
(7) The product as defined in (6), wherein the sheet has a percent moisture content of less than 10 % by mass.

(8) The product as defined in (6) or (7), wherein the sheet is a paper containing the complex as an internal filler.

(9) The product as defined in (1), which is a powder.

(10) The product as defined in (10), wherein the powder has an average particle size of less than 100 $\mu$m.

(11) The product as defined in (1), which is a microsphere.

(12) The product as defined in (11), wherein the microsphere has an average particle size of 100 $\mu$m or more and less than 1000 $\mu$m.

(13) The product as defined in (1), which is a granule.

(14) The product as defined in (13), wherein the granule has an average particle size of 1.0 mm or more and less than 10 mm.

(15) The product as defined in (1), which is a pellet.

(16) The product as defined in (15), wherein the pellet has a diameter of 10 mm or more and 50 mm or less.

(17) The product as defined in (1), which is a molding.

(18) The product as defined in (17), wherein the molding has a diameter of 5 cm or more and 100 cm or less.

(19) The product as defined in (1), which is a yarn.

(20) The product as defined in (19), wherein the yarn has a fiber diameter of 1 mm or more and 10 mm or less.

(21) The product as defined in (1), which is a foam.

(22) The product as defined in (21), wherein the foam has a density of 0.01 to 0.1 g/cm$^3$ or less.

(23) The product as defined in any one of (1) to (22), wherein the inorganic particles have an average primary particle size of 200 nm or less.

(24) The product as defined in any one of (6) to (8), wherein the inorganic particles are at least partially a metal salt of calcium, magnesium or barium.

(25) The product as defined in any one of (1) to (5), and (9) to (23), wherein the inorganic particles are at least partially a silicate, or a metal salt of aluminum, or metal particles including titanium, copper, silver, iron, manganese or zinc.

(26) The product as defined in any one of (1) to (25), wherein the fiber is a chemical fiber, a regenerated fiber or a natural fiber.

(27) The product as defined in (26), wherein the fiber is a wood-derived cellulose fiber.

(28) The product as defined in any one of (1) to (27), wherein the weight ratio between the fiber and the inorganic particles is 5/95 to 95/5.

(29) A mixture comprising the product as defined in any one of (1) to (28).

(30) A process for preparing a product containing a complex of a fiber and inorganic particles, comprising the steps of:

- synthesizing inorganic particles in a solution in the presence of a fiber to synthesize a complex of the fiber and the inorganic particles; and
- adjusting the moisture content of the complex of the fiber and the inorganic particles.

(31) The process as defined in (30) for preparing an aqueous suspension containing a complex of a fiber and inorganic particles, wherein the step of adjusting the moisture content of the complex of the fiber and the inorganic particles comprises adjusting the percent moisture content to 90 % by mass or more and 99 % by mass or less.

(32) The process as defined in (30) for preparing a pulp containing a complex of a fiber and inorganic particles, wherein the step of adjusting the moisture content of the complex of the fiber and the inorganic particles comprises adjusting the percent moisture content to 10 % by mass or more and less than 90 % by mass.

(33) The process as defined in (30) for preparing a sheet containing a complex of a fiber and inorganic particles, wherein the step of adjusting the moisture content of the complex of the fiber and the inorganic particles comprises adjusting the percent moisture content to less than 10 % by mass.

(34) A process for preparing a product containing a complex of a fiber and inorganic particles, comprising the steps of:

- synthesizing inorganic particles in a solution in the presence of a fiber to synthesize a complex of the fiber and the inorganic particles; and
- adjusting the particle size of the complex of the fiber and the inorganic particles.

(35) The process as defined in (34) for preparing a powder containing a complex of a fiber and inorganic particles, wherein the step of adjusting the particle size of the complex of the fiber and the inorganic particles comprises adjusting the average particle size of the complex of the fiber and the inorganic particles to less than 100 $\mu$m.

(36) The process as defined in (34) for preparing a microsphere containing a complex of a fiber and inorganic particles, wherein the step of adjusting the particle size of the complex of the fiber and the inorganic particles comprises adjusting the average particle size of the complex of the fiber and the inorganic particles to 100 $\mu$m or more and less than 1000 $\mu$m.

(37) The process as defined in (34) for preparing a granule containing a complex of a fiber and inorganic particles, wherein the step of adjusting the particle size of the complex of the fiber and the inorganic particles comprises adjusting the average particle size of the complex of the fiber and the inorganic particles to 1.0 mm or more and less than 10 mm.

(38) A process for preparing a pellet containing a complex of a fiber and inorganic particles, comprising the steps of:

- synthesizing inorganic particles in a solution in the presence of a fiber to synthesize a complex of the fiber and the inorganic particles; and
- pelletizing the complex of the fiber and the inorganic particles.

(39) The process as defined in (38), comprising the step of adjusting the percent moisture content of the complex of the fiber and the inorganic particles to 45 % by mass or more and 80 % by mass or less by separating solids and liquids using a solid-liquid separator.

(40) A process for preparing a molding containing a complex of a fiber and inorganic particles, comprising the steps of:

- synthesizing inorganic particles in a solution in the presence of a fiber to synthesize a complex of the fiber and the inorganic particles; and
- adjusting the percent moisture content of the complex of the fiber and the inorganic particles to 10 % by mass or more and 35 % by mass or less by separating solids and liquids using a solid-liquid separator.

(41) A process for preparing a yarn containing a complex of a fiber and inorganic particles, comprising the steps of:

- synthesizing inorganic particles in a solution in the presence of a fiber to synthesize a fiber complex of the fiber and the inorganic particles; and
- subjecting the complex of the fiber and the inorganic particles to yarn twisting.

(42) The process as defined in (41), comprising the step of slitting a sheet containing the fiber complex of the fiber and the inorganic particles adjusted to a percent moisture content of less than 10 % by mass before the step of subjecting the fiber complex of the fiber and the inorganic particles to yarn twisting.

(43) A process for preparing a foam containing a fiber complex of a fiber and inorganic particles, comprising the steps of:

- synthesizing inorganic particles in a solution in the presence of a fiber to synthesize a fiber complex of the fiber and the inorganic particles; and
- agitating the fiber complex of the fiber and the inorganic particles using an agitator.

(44) The process as defined in (43), further comprising the step of drying bubbles formed.

ADVANTAGEOUS EFFECTS OF INVENTION

The present invention makes it possible to provide products comprising a fiber complex of a fiber and inorganic particles, as well as processes for preparing them. In particular, the present invention makes it possible to provide products comprising a fiber complex of a fiber and inorganic particles and assuming the form of an aqueous suspension, a pulp, a sheet, a powder, a granule, a microsphere, a pellet, a paste, a molding, a yarn, or a foam, as well as processes for preparing them.

Thus, products comprising a fiber complex of a fiber and inorganic particles and assuming the form of an aqueous suspension are obtained so that the fiber complex of a fiber and inorganic particles can be prepared efficiently at low production costs in short production processes. Further, products comprising a fiber complex of a fiber and inorganic particles and assuming the form of a pulp, a sheet, a powder, a granule, or a microsphere are obtained so that the fiber complex of a fiber and inorganic particles can be readily transferred or incorporated into other products. Furthermore, products comprising a fiber complex of a fiber and inorganic particles and assuming the form of a pellet, a paste, a molding, a yarn, or a foam are obtained so that the resulting products have excellent handling properties and combine the functions of the fiber complex of the fiber and the inorganic particles (flame retardancy, opacity, radiation shielding properties, adsorptivity, antimicrobial properties and the like) in single products. Finally, the incorporation of a product comprising a fiber complex of a fiber and inorganic particles and assuming the form of an aqueous suspension, a pulp, a sheet, a powder, a granule, a microsphere, a pellet, a paste, a molding, a yarn, or a foam makes it possible to obtain a composition having the functions of the fiber complex of the fiber and the inorganic particles (flame retardancy, opacity, radiation shielding properties, adsorptivity, antimicrobial properties and the like).

BRIEF DESCRIPTION OF DRAWINGS

Fig. 1 is a schematic diagram showing the reaction system used for preparing Sample 1 in Experiment A.

Fig. 2 shows electron micrographs of a complex synthesized in Experiment 1 (Sample 1; magnification: left 10000X, right 50000X).

Fig. 3 shows electron micrographs of a complex synthesized in Experiment 1 (Sample 2; magnification: left 10000X, right 50000X).

Fig. 4 shows electron micrographs of a complex synthesized in Experiment 1 (Sample 3; magnification: left 10000X, right 50000X).

Fig. 5 is a schematic diagram showing a reaction system used in Experiment 1 (Sample 1).

Fig. 6 is a schematic diagram showing the ultrafine bubble generator used in Experiment 1.

Fig. 7 is a schematic diagram showing a reaction system used in Experiment 1 (Sample 2).

Fig. 8 is a schematic diagram of the system for preparing Sample 3 in Experiment 1 (P: a pump).

Fig. 9 shows an appearance photograph of foam C in Experiment 3 (left: top view, right: side view).

Fig. 10 shows an appearance photograph of foam E in Experiment 3 (left: top view, right: side view).

DESCRIPTION OF EMBODIMENTS

The present invention relates to products comprising a fiber complex of a fiber and inorganic particles, as well as processes for preparing them. In particular, the present invention relates to products comprising a fiber complex of a fiber and inorganic particles and assuming the form of an aqueous suspension, a pulp, a sheet, a powder, a granule, a microsphere, a pellet, a paste, a molding, a yarn, or a foam, as well as processes for preparing them.

In the present invention, inorganic particles and a fiber are complexed to form a fiber complex. As used herein, the term "fiber complex" refers to a complex in which inorganic particles bind to the surface of a fiber via hydrogen bonds or van der waals forces or the like rather than a simple mixture of inorganic particles and a fiber. For this reason, the inorganic particles rarely drop off the fiber even through a disintegration process. The binding strength between inorganic particles and a fiber in a complex can be evaluated by, for example, a value such as ash retention (in %, i.e., [(the ash content of a sheet) / (the ash content of the complex before disintegration)] x 100). Specifically, a fiber complex is dispersed in water to adjust the solids content at 0.2 % and disintegrated in a standard disintegrator as defined by JIS P 8220-1: 2012 for 5 minutes, and then formed into a sheet using a 150-mesh wire according to JIS P 8222: 1998, and the ash retention of the sheet thus prepared can be used for the evaluation, wherein the ash retention is 20 % by mass or more in preferred embodiments, and the ash retention is 50 % by mass or more in more preferred embodiments.

Fibers

The fiber forming part of the fiber complex is not specifically limited so far as it is a fiber, and examples of fibers that can be used include, without limitation, not only natural fibers but also regenerated fibers (semisynthetic fibers) such as rayon and lyocell and synthetic fibers and the like. Examples of raw materials of fibers include pulp fibers (wood pulps and non-wood pulps), cellulose nanofibers, bacterial celluloses, animal-derived celluloses such as Ascidiacea, algae, etc., among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof.

The technique for pulping the wood raw materials (woody plant raw materials) is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching).

Examples of non-wood pulps include cotton, hemp, sisal (Agave sisalana), abaca (Musa textilis), flax, straw, bamboo, bagas, kenaf, sugar cane, corn, rice straw, Broussonetia kazinoki × B. papyrifera, Edgeworthia chrysantha and the like.

The pulp fibers may be unbeaten or beaten, and may be chosen depending on the properties of the fiber complex sheet, but they are preferably beaten. This can be expected to improve the sheet strength and to promote the adhesion of inorganic particles.

Moreover, these cellulosic raw materials can be further treated so that they can also be used as pulverized celluloses, chemically modified celluloses such as oxidized celluloses, and cellulose nanofibers (CNFs) (microfibrillated celluloses (MFCs), TEMPO-oxidized CNFs, phosphate esters of CNFs, carboxymethylated CNFs, mechanically ground CNFs and the like). Pulverized celluloses used in the present invention include both of the so-called powdered celluloses and the mechanically ground CNFs mentioned above. The powdered celluloses may be, for example, rod-like crystalline cellulose powders having a certain particle size distribution prepared by purifying/drying and grinding/sieving the pulp slurry obtained by mechanically grinding an untreated accepted pulp fraction or the undecomposed residue obtained after acid hydrolysis of an accepted pulp fraction, or may be commercially available products such as KC FLOCK (from Nippon Paper Industries Co., Ltd.), CEOLUS (from Asahi Kasei Chemicals Corp.), AVICEL (from FMC Corporation) and the like. The degree of polymerization of celluloses in the powdered celluloses is preferably in the order of 100 to 1500, and the powdered celluloses preferably have a crystallinity of 70 to 90 % as determined by X-ray diffraction and also preferably have a volume average particle size of 1 $\mu$m or more and 100 $\mu$m or less as determined by a laser diffraction particle size distribution analyzer. Oxidized celluloses used in the present invention can be obtained by oxidation with an oxidizing agent in water in the presence of an N-oxyl compound and a compound selected from the group consisting of a bromide, an iodide or a mixture thereof, for example. Cellulose nanofibers can be obtained by disintegrating the cellulosic raw materials mentioned above. Disintegration methods that can be used include, for example, mechanically grinding or beating an aqueous suspension or the like of a cellulose or a chemically modified cellulose such as an oxidized cellulose using a refiner, a high pressure homogenizer, a grinder, a single screw or multi-screw kneader, a bead mill or the like. Cellulose nanofibers may be prepared by using one or a combination of the methods described above. The fiber diameter of the cellulose nanofibers thus prepared can be determined by electron microscopic observation or the like and falls within the range of, for example, 5 nm to 1000 nm, preferably 5 nm to 500 nm, more preferably 5 nm to 300 nm. During the preparation of the cellulose nanofibers, a given compound can be further added before and/or after the celluloses are disintegrated and/or micronized, whereby it reacts with the cellulose nanofibers to functionalize the hydroxyl groups. Functional groups used for the functionalization include acyl groups such as acetyl, ester, ether, ketone, formyl, benzoyl, acetal, hemiacetal, oxime, isonitrile, allene, thiol, urea, cyano, nitro, azo, aryl, aralkyl, amino, amide, imide, acryloyl, methacryloyl, propionyl, propioloyl, butyryl, 2-butyryl, pentanoyl, hexanoyl, heptanoyl, octanoyl, nonanoyl, decanoyl, undecanoyl, dodecanoyl, myristoyl, palmitoyl, stearoyl, pivaloyl, benzoyl, naphthoyl, nicotinoyl, isonicotinoyl, furoyl and cinnamoyl; isocyanate groups such as 2-methacryloyloxyethyl isocyanoyl; alkyl groups such as methyl, ethyl, propyl, 2-propyl, butyl, 2-butyl, tert-butyl, pentyl, hexyl, heptyl, octyl, nonyl, decyl, undecyl, dodecyl, myristyl, palmityl and stearyl; oxirane, oxetane, oxyl, thiirane, thietane and the like. Hydrogens in these substituents may be substituted by a functional group such as hydroxyl or carboxyl. Further, the alkyl groups may be partially unsaturated with an unsaturated bond. Compounds used for introducing these functional groups are not specifically limited and include, for example, compounds containing phosphate-derived groups, compounds containing carboxylate-derived groups, compounds containing sulfate-derived groups, compounds containing sulfonate-derived groups, compounds containing alkyl groups, compounds containing amine-derived groups and the like. Phosphate-containing compounds include, but not specifically limited to, phosphoric acid and lithium salts of phosphoric acid such as lithium dihydrogen phosphate, dilithium hydrogen phosphate, trilithium phosphate, lithium pyrophosphate, and lithium polyphosphate. Other examples include sodium salts of phosphoric acid such as sodium dihydrogen phosphate, disodium hydrogen phosphate, trisodium phosphate, sodium pyrophosphate, and sodium polyphosphate. Further examples include potassium salts of phosphoric acid such as potassium dihydrogen phosphate, dipotassium hydrogen phosphate, tripotassium phosphate, potassium pyrophosphate, and potassium polyphosphate. Still further examples include ammonium salts of phosphoric acid such as ammonium dihydrogen phosphate, diammonium hydrogen phosphate, triammonium phosphate, ammonium pyrophosphate, ammonium polyphosphate and the like. Among them, preferred are, but not specifically limited to, phosphoric acid, sodium salts of phosphoric acid, potassium salts of phosphoric acid, and ammonium salts of phosphoric acid, and more preferred are sodium dihydrogen phosphate and disodium hydrogen phosphate because they allow phosphate groups to be introduced with high efficiency so that they are convenient for industrial applications. Carboxyl-containing compounds include, but not specifically limited to, dicarboxylic compounds such as maleic acid, succinic acid, phthalic acid, fumaric acid, glutaric acid, adipic acid, and itaconic acid; and tricarboxylic compounds such as citric acid, and aconitic acid. Acid anhydrides of carboxyl-containing compounds include, but not specifically limited to, acid anhydrides of dicarboxylic compounds such as maleic anhydride, succinic anhydride, phthalic anhydride, glutaric anhydride, adipic anhydride, and itaconic anhydride. Derivatives of carboxyl-containing compounds include, but not specifically limited to, imides of acid anhydrides of carboxyl-containing compounds, and derivatives of acid anhydrides of carboxyl-containing compounds. Imides of acid anhydrides of carboxyl-containing compounds include, but not specifically limited to, imides of dicarboxylic compounds such as maleimide, succinimide, and phthalimide. Derivatives of acid anhydrides of carboxyl-containing compounds are not specifically limited. For example, they include acid anhydrides of carboxyl-containing compounds in which hydrogen atoms are at least partially substituted by a substituent (e.g., alkyl, phenyl or the like) such as dimethylmaleic anhydride, diethylmaleic anhydride, and diphenylmaleic anhydride. Among the compounds containing carboxylate-derived groups listed above, preferred are, but not specifically limited to, maleic anhydride, succinic anhydride and phthalic anhydride because they are convenient for industrial applications and can be readily gasified. Further, the cellulose nanofibers may be functionalized by a compound physically adsorbed rather than chemically bound to the cellulose nanofibers. Physically adsorbed compounds include surfactants, which may be anionic, cationic, or nonionic. When the celluloses are functionalized as described above before they are disintegrated and/or ground, these functional groups can be removed, giving back the original hydroxyl groups after they are disintegrated and/or ground. The functionalization as described above can promote disintegration into cellulose nanofibers or help cellulose nanofibers to be mixed with various materials during their use.

Composite fibers of the fibers shown above with synthetic fibers can also be used in the present invention, including composite fibers of the fibers with, for example, polyesters, polyamides, polyolefins, acrylic fibers, glass fibers, carbon fibers, various metal fibers and the like.

The fibers shown above may be used alone or as a mixture of two or more of them. Especially, the complex preferably comprises a wood pulp or a combination of a wood pulp and a non-wood pulp and/or a synthetic fiber, more preferably a wood pulp alone.

In preferred embodiments, the fiber forming part of the fiber complex of the present invention is a pulp fiber. Alternatively, fibrous materials collected from waste water of papermaking factories may be supplied to the carbonation reaction of the present invention, for example. Various composite particles including those of various shapes such as fibrous particles can be synthesized by supplying such materials to the reaction vessel.

In the present invention, materials that are not directly involved in the carbonation reaction but incorporated into the product inorganic particles to form composite particles can be used in addition to a fiber. In the present invention, composite particles incorporating inorganic particles, organic particles, polymers or the like can be prepared by synthesizing inorganic particles in a solution further containing these materials in addition to a fiber such as a pulp fiber.

The fiber length of the fiber to be complexed is not specifically limited, but the average fiber length can be in the order of 0.1 $\mu$m to 15 mm, or may be 1 $\mu$m to 12 mm, 100 $\mu$m to 10 mm, 500 $\mu$m to 8 mm or the like, for example.

Inorganic particles

In the present invention, the inorganic particles to be complexed with a fiber are not specifically limited, but preferably inorganic particles insoluble or slightly soluble in water. The inorganic particles are preferably insoluble or slightly soluble in water because the inorganic particles are sometimes synthesized in an aqueous system or the fiber complex is sometimes used in an aqueous system.

As used herein, the term "inorganic particles" refers to a metal or metal compound. Further, the metal compound refers to the so-called inorganic salt formed by an ionic bond between a metal cation (e.g., $Na^+$, $Ca^{2+}$, $Mg^{2+}$, $Al^{3+}$, $Ba^{2+}$ or the like) and an anion (e.g., $O^{2-}$, $OH^-$, $CO3^{2-}$, $PO_4^{3-}$, $SO_4^{2-}$, $NO_3^-$, $Si_2O3^{2-}$, $SiO_3^{2-}$, $Cl^-$, $F^-$, $S^{2-}$ or the like). In the present invention, the inorganic particles are preferably at least partially a metal salt of calcium, magnesium or barium, or the inorganic particles are preferably at least partially a silicate, or a metal salt of aluminum, or metal particles including titanium, copper, silver, iron, manganese or zinc.

These inorganic particles can be synthesized by a known method, which may be either a gas-liquid or liquid-liquid method. An example of gas-liquid methods is the carbonation process, according to which magnesium carbonate can be synthesized by reacting magnesium hydroxide and carbonic acid gas, for example. Examples of liquid-liquid methods include the reaction between an acid (hydrochloric acid, sulfuric acid or the like) and a base (sodium hydroxide, potassium hydroxide or the like) by neutralization; the reaction between an inorganic salt and an acid or a base; and the reaction between inorganic salts. For example, barium sulfate can be obtained by reacting barium hydroxide and sulfuric acid, or aluminum hydroxide can be obtained by reacting aluminum sulfate and sodium hydroxide, or composite inorganic particles of calcium and aluminum can be obtained by reacting calcium carbonate and aluminum sulfate. Such syntheses of inorganic particles can be performed in the presence of a given metal or metal compound in the reaction solution, in which case the metal or metal compound is efficiently incorporated into the inorganic particles so that it can form composites with them. For example, composite particles of calcium phosphate and titanium can be obtained when calcium phosphate is synthesized by adding phosphoric acid to calcium carbonate in the presence of titanium dioxide in the reaction solution.

In cases where calcium carbonate is to be synthesized, it can be synthesized by, for example, the carbonation process, the soluble salt reaction process, the lime-soda process, the Solvay process or the like, and in preferred embodiments, calcium carbonate is synthesized by the carbonation process.

Typically in the preparation of calcium carbonate by the carbonation process, lime is used as a calcium source to synthesize calcium carbonate via a slaking step in which water is added to quick lime CaO to give slaked lime $Ca(OH)_2$

and a carbonation step in which carbonic acid gas $CO_2$ is injected into the slaked lime to give calcium carbonate $CaCO_3$. During then, the suspension of slaked lime prepared by adding water to quick lime may be passed through a screen to remove less soluble lime particles contained in the suspension. Alternatively, slaked lime may be used directly as a calcium source. For synthesizing calcium carbonate by the carbonation process in the present invention, the carbonation reaction may be performed in the presence of cavitation bubbles.

Typically known reactors for preparing calcium carbonate by the carbonation process (carbonation reactors or carbonators) include gas injection carbonators and mechanically stirred carbonators. In the gas injection carbonators, carbonic acid gas is injected into a carbonation reactor containing a suspension of slaked lime (milk of lime) where the slaked lime is reacted with the carbonic acid gas, but it is difficult to uniformly and precisely control the size of bubbles simply by injecting carbonic acid gas, which imposes limitations in terms of the reaction efficiency. On the other hand, the mechanically stirred carbonators are equipped with a stirrer inside the carbonators and carbonic acid gas is introduced near the stirrer, whereby the carbonic acid gas is dispersed as fine bubbles to improve the efficiency of the reaction between the slaked lime and the carbonic acid gas ("Handbook of Cement, Gypsum and Lime" published by GIHODO SHUPPAN Co., Ltd., 1995, page 495).

If the reaction solution had a high concentration or the carbonation reaction progressed in cases where stirring took place with a stirrer provided inside a carbonation reactor as in the mechanically stirred carbonators, however, the resistance of the reaction solution increased to hinder sufficient stirring so that the carbonation reaction was difficult to exactly control or a considerable load was imposed on the stirrer for sufficient stirring, thus leading to energy disadvantages. Further, a gas injection port is located at a lower site of the carbonator, and blades of the stirrer are provided near the bottom of the carbonator to promote stirring. Less soluble lime screen residues settle quickly and therefore always stay at the bottom, thereby blocking the gas injection port or disturbing the balance of the stirrer. Moreover, conventional methods required not only a carbonator but also a stirrer and equipment for introducing carbonic acid gas into the carbonator, which also incurred much costs of equipment. In the mechanically stirred carbonators, the carbonic acid gas supplied near the stirrer is dispersed as fine bubbles by the stirrer to improve the efficiency of the reaction between the slaked lime and the carbonic acid gas, but the carbonic acid gas could not be dispersed as sufficiently fine bubbles if the concentration of the reaction solution was high or in other cases, and it was sometimes difficult to precisely control the morphology or the like of the produced calcium carbonate, which also imposed limitations in terms of the carbonation reaction. In the present invention, calcium carbonate is synthesized in the presence of cavitation bubbles, whereby the carbonation reaction proceeds efficiently and uniform calcium carbonate microparticles can be prepared. Especially, the use of a jet cavitation allows sufficient stirring without any mechanical stirrer such as blades. In the present invention, previously known reaction vessels can be used, including the gas injection carbonators and the mechanically stirred carbonators as described above without any inconveniences as a matter of course, and these vessels may be combined with a jet cavitation using a nozzle or the like.

When calcium carbonate is synthesized by the carbonation process, the aqueous suspension of slaked lime preferably has a solids content in the order of 0.1 to 40 % by weight, more preferably 0.5 to 30 % by weight, still more preferably 1 to 20 % by weight. If the solids content is low, the reaction efficiency decreases and the production cost increases, but if the solids content is too high, the flowability decreases and the reaction efficiency decreases. In the present invention, calcium carbonate is synthesized in the presence of cavitation bubbles so that the reaction solution and carbonic acid gas can be mixed well even if a suspension (slurry) having a high solids content is used.

The aqueous suspension containing slaked lime that can be used includes those commonly used for the synthesis of calcium carbonate, and can be prepared by, for example, mixing slaked lime with water or by slaking (digesting) quick lime (calcium oxide) with water. The slaking conditions include, but not specifically limited to, a CaO concentration of 0.1 % by weight or more, preferably 1 % by weight or more, and a temperature of 20 to 100 °C, preferably 30 to 100 °C, for example. Further, the average residence time in the slaking reactor (slaker) is not specifically limited either, but can be, for example, 5 minutes to 5 hours, and preferably within 2 hours. It should be understood that the slaker may be batch or continuous. It should be noted that, in the present invention, the carbonation reactor (carbonator) and the slaking reactor (slaker) may be provided separately, or one reactor may serve as both carbonation reactor and slaking reactor.

In cases where magnesium carbonate is to be synthesized, a known method can be used for synthesizing magnesium carbonate. For example, basic magnesium carbonate can be synthesized via normal magnesium carbonate from magnesium bicarbonate, which is synthesized from magnesium hydroxide and carbonic acid gas. Magnesium carbonate can be obtained in various forms such as magnesium bicarbonate, normal magnesium carbonate, basic magnesium carbonate and the like depending on the synthesis method, among which basic magnesium carbonate is especially preferred as magnesium carbonate forming part of the fiber complex of the present invention. This is because magnesium bicarbonate is relatively unstable, while normal magnesium carbonate consists of columnar (needle-like) crystals that may be less likely to adhere to fibers. If chemical reactions are allowed to proceed in the presence of a fiber until basic magnesium carbonate is formed, however, a complex of magnesium carbonate and the fiber can be obtained in which the surface of the fiber is covered in a fish scale-like pattern.

Further in the present invention, the reaction solution in the reaction vessel can be circulated and used. By circulating the reaction solution in this way to increase contacts between the reaction solution and carbonic acid gas, the reaction efficiency increases and desired inorganic particles can be easily obtained.

In the present invention, a gas such as carbon dioxide (carbonic acid gas) is injected into the reaction vessel where it can be mixed with the reaction solution. According to the present invention, the reaction can be performed with good efficiency because carbonic acid gas can be supplied to the reaction solution without any gas feeder such as a fan, blower or the like and the carbonic acid gas is finely dispersed by cavitation bubbles.

In the present invention, the carbon dioxide concentration of the gas containing carbon dioxide is not specifically limited, but the carbon dioxide concentration is preferably higher. Further, the amount of carbonic acid gas introduced into the injector is not limited and can be selected as appropriate, but carbonic acid gas is preferably used at a flow rate of 100 to 10000 L/hr per kg of slaked lime, for example.

The gas containing carbon dioxide of the present invention may be substantially pure carbon dioxide gas or a mixture with another gas. For example, a gas containing an inert gas such as air or nitrogen in addition to carbon dioxide gas can be used as the gas containing carbon dioxide. In addition to carbon dioxide gas (carbonic acid gas), exhaust gases discharged from incinerators, coal-fired boilers, heavy oil-fired boilers and the like in papermaking factories can also be conveniently used as the gas containing carbon dioxide. Alternatively, the carbonation reaction can also be performed using carbon dioxide emitted from the lime calcination process.

In cases where barium sulfate ($BaSO_4$) is to be synthesized, the intended product barium sulfate is a crystalline ionic compound represented by the formula $BaSO_4$ and composed of barium ions and sulfate ions, and often assumes a plate-like or columnar form and is slightly soluble in water. Pure barium sulfate occurs as colorless crystals, but turns yellowish brown or black gray and translucent when it contains impurities such as iron, manganese, strontium, calcium or the like. It occurs as a natural mineral or can be synthesized by chemical reaction. Especially, synthetic products obtained by chemical reaction are not only used for medical purposes (as radiocontrast agents) but also widely used for paints, plastics, batteries and the like by taking advantage of their chemical stability.

In cases where a hydrotalcite is to be synthesized, a known method can be used for synthesizing the hydrotalcite. For example, a fiber is immersed in an aqueous carbonate solution containing carbonate ions forming interlayers and an alkaline solution (sodium hydroxide or the like) in a reaction vessel, and then an acid solution (an aqueous metal salt solution containing divalent metal ions and trivalent metal ions forming host layers) is added to synthesize a hydrotalcite via a co-precipitation reaction at controlled temperature, pH and the like. Alternatively, a hydrotalcite can also be synthesized via a co-precipitation reaction at controlled temperature, pH and the like by immersing a fiber in an acid solution (an aqueous metal salt solution containing divalent metal ions and trivalent metal ions forming host layers) in a reaction vessel, and then adding dropwise an aqueous carbonate solution containing carbonate ions forming interlayers and an alkaline solution (sodium hydroxide or the like). The reaction typically takes place at ordinary pressure, though a process involving a hydrothermal reaction using an autoclave or the like has also been reported (JPA 1985-6619).

In the present invention, chlorides, sulfides, nitrates and sulfates of magnesium, zinc, barium, calcium, iron, copper, cobalt, nickel, and manganese can be used as sources of divalent metal ions forming host layers. Similarly, chlorides, sulfides, nitrates and sulfates of aluminum, iron, chromium and gallium can be used as sources of trivalent metal ions forming host layers.

In the present invention, carbonate ions, nitrate ions, chloride ions, sulfate ions, phosphate ions and the like can be used as interlayer anions. When interlayer anions are carbonate ions, sodium carbonate can be used as a source of carbonate ions. It should be noted that sodium carbonate can be replaced by a gas containing carbon dioxide (carbonic acid gas) including substantially pure carbon dioxide gas or a mixture with another gas. For example, exhaust gases discharged from incinerators, coal-fired boilers, heavy oil-fired boilers and the like in papermaking factories can be conveniently used as the gas containing carbon dioxide. Alternatively, the carbonation reaction can also be performed using carbon dioxide emitted from the lime calcination process.

Synthesis of the fiber complexes

The fiber complexes of the present invention can be obtained by synthesizing inorganic particles in the presence of a fiber. This is because the surface of the fiber provides a suitable site where the inorganic particles precipitate, thus facilitating the synthesis of fiber complexes of the inorganic particles and the fiber.

Processes for preparing the fiber complexes of the present invention essentially comprise synthesizing inorganic particles in a solution containing a fiber. For example, the fiber complexes may be synthesized by stirring/mixing a solution containing a fiber and precursors of inorganic particles in an open reaction vessel or injecting an aqueous suspension containing a fiber and precursors of inorganic particles into a reaction vessel. Inorganic particles may be synthesized in the presence of cavitation bubbles generated during the injection of an aqueous suspension of precursors of the inorganic particles into a reaction vessel.

When one of precursors of inorganic particles is alkaline, fiber complexes of the inorganic particles and a fiber can be obtained efficiently by dispersing the fiber in a solution of the alkaline precursor in advance because the fiber can be swollen. The reaction can be started after swelling of the fiber has been promoted by stirring for 15 minutes or more after mixing, or the reaction can be started immediately after mixing. When a material liable to interact with celluloses such as aluminum sulfate (alum, polyaluminum chloride or the like) is used as a part of precursors of inorganic particles, the proportion of the inorganic particles adhered to the fiber may be improved by mixing the precursor containing aluminum sulfate with the fiber in advance.

In the present invention, a liquid may be injected under conditions where cavitation bubbles are generated in a reaction vessel or a liquid may be injected under conditions where cavitation bubbles are not generated. The reaction vessel is preferably a pressure vessel in either case. As used herein, the term "pressure vessel" refers to a vessel that can withstand a pressure of 0.005 MPa or more. Under conditions where cavitation bubbles are not generated, the pressure in the pressure vessel is preferably 0.005 MPa or more and 0.9 MPa or less expressed in static pressure.

In one preferred embodiment, the average primary particle size of the inorganic particles in the fiber complexes of the present invention can be, for example, 1 $\mu$m or less, and it is also possible to use inorganic particles having an average primary particle size of 500 nm or less, or inorganic particles having an average primary particle size of 200 nm or less, or even inorganic particles having an average primary particle size of 100 nm or less, or inorganic particles having an average primary particle size of 50 nm or less. On the other hand, the inorganic particles can have an average primary particle size of 10 nm or more. It should be noted that the average primary particle size can be determined using a laser diffraction particle size distribution analyzer or electron micrographs.

For preparing the fiber complexes of the present invention, various known auxiliaries can also be added. For example, chelating agents can be added, specifically including polyhydroxycarboxylic acids such as citric acid, malic acid, and tartaric acid; dicarboxylic acids such as oxalic acid; sugar acids such as gluconic acid; aminopolycarboxylic acids such as iminodiacetic acid and ethylenediamine tetraacetic acid and alkali metal salts thereof; alkali metal salts of polyphosphoric acids such as hexametaphosphoric acid and tripolyphosphoric acid; amino acids such as glutamic acid and aspartic acid and alkali metal salts thereof; ketones such as acetylacetone, methyl acetoacetate and allyl acetoacetate; sugars such as sucrose; and polyols such as sorbitol. Surface-treating agents can also be added, including saturated fatty acids such as palmitic acid and stearic acid; unsaturated fatty acids such as oleic acid and linoleic acid; alicyclic carboxylic acids; resin acids such as abietic acid; as well as salts, esters and ethers thereof; alcoholic activators, sorbitan fatty acid esters, amide- or amine-based surfactants, polyoxyalkylene alkyl ethers, polyoxyethylene nonyl phenyl ether, sodium alpha-olefin sulfonate, long-chain alkylamino acids, amine oxides, alkylamines, quaternary ammonium salts, aminocarboxylic acids, phosphonic acids, polycarboxylic acids, condensed phosphoric acids and the like. Further, dispersants can also be used, if desired. The dispersants include, for example, sodium polyacrylate, sucrose fatty acid esters, glycerol esters of fatty acids, ammonium salts of acrylic acid-maleic acid copolymers, methacrylic acid-naphthoxypolyethylene glycol acrylate copolymers, ammonium salts of methacrylic acid-polyethylene glycol monomethacrylate copolymers, polyethylene glycol monoacrylate and the like. These can be used alone or as a combination of two or more of them. They may be added before or after the synthesis reaction. Such additives can be added preferably in an amount of 0.001 to 20 %, more preferably 0.1 to 10 % of inorganic particles.

The reaction conditions under which the fiber complexes are synthesized in the present invention are not specifically limited, and can be appropriately selected depending on the purposes. For example, the temperature of the synthesis reaction can be 0 to 90 °C, preferably 10 to 80 °C, more preferably 50 to 70 °C, especially preferably around 60 °C. The reaction temperature can be controlled by regulating the temperature of the reaction solution using a temperature controller, and if the temperature is low, the reaction efficiency decreases and the cost increases, but if it exceeds 90 °C, coarse inorganic particles tend to increase.

Further in the present invention, the reaction can be a batch reaction or a continuous reaction. Typically, the reaction is preferably performed as a batch process because of the convenience for removing the residue remaining after the reaction. The scale of the reaction is not specifically limited, and can be 100 L or less, or more than 100 L. The volume of the reaction vessel can be, for example, in the order of 10 L to 100 L, or may be in the order of 100 L to 1000 L.

Further, the reaction can be controlled by, for example, monitoring the pH of the reaction solution, and the reaction can be performed until the pH reaches, for example, less than pH 9, preferably less than pH 8, more preferably around pH 7 depending on the pH profile of the reaction solution in the case of the carbonation reaction of calcium carbonate.

Alternatively, the reaction can be controlled by monitoring the conductivity of the reaction solution. The carbonation reaction is preferably performed until the conductivity drops to, for example, 1 mS/cm or less in the case of the carbonation reaction of calcium carbonate.

Furthermore, the reaction can also be controlled simply by the reaction period, and specifically it can be controlled by adjusting the period during which the reactants stay in the reaction vessel. Additionally, the reaction can also be controlled in the present invention by stirring the reaction solution in the reaction vessel or performing the reaction as a multistage reaction.

The weight ratio between the fiber and the inorganic particles can be 5/95 to 95/5, or may be 10/90 to 90/10, 20/80 to 80/20, 30/70 to 70/30, or 40/60 to 60/40.

In the present invention, the reaction product fiber complex is obtained as a suspension so that it can be stored in a storage tank or subjected to processing such as concentration, dehydration, grinding, classification, aging, or dispersion, as appropriate. These can be accomplished by known processes, which may be appropriately selected taking into account the purposes, energy efficiency and the like. For example, the concentration/dehydration process is performed by using a centrifugal dehydrator, sedimentation thickener or the like. Examples of such centrifugal dehydrators include decanters, screw decanters and the like. When a filter or dehydrator is used, the type of it is not specifically limited either, and any of the common ones can be used, including, for example, pressure dehydrators such as filter presses, drum filters, belt presses and tube presses or vacuum drum filters such as Oliver filters or the like, which can be suitably used to give a calcium carbonate cake. Grinding means include ball mills, sand grinder mills, impact mills, high pressure homogenizers, low pressure homogenizers, Dyno mills, ultrasonic mills, Kanda grinders, attritors, millstone type mills, vibration mills, cutter mills, jet mills, disintegrators, beaters, single screw extruders, twin screw extruders, ultrasonic stirrers, juicers/mixers for home use, etc. Classification means include sieves such as meshes, outward or inward flow slotted or round-hole screens, vibrating screens, heavyweight contaminant cleaners, lightweight contaminant cleaners, reverse cleaners, screening testers and the like. Dispersion means include high speed dispersers, low speed kneaders and the like.

The fiber complexes obtained by the present invention can be compounded into fillers or pigments as a suspension without being completely dehydrated, or can be dried into powder. The dryer used in the latter case is not specifically limited either, but air stream dryers, band dryers, spray dryers and the like can be suitably used, for example.

In the present invention, water is used for preparing a suspension or for other purposes, which can include common tap water, industrial water, groundwater, well water and the like, and also can conveniently include ion-exchanged water, distilled water, ultrapure water, industrial waste water, and the water derived from production processes.

The fiber complexes obtained by the present invention can be modified by known methods. In one embodiment, for example, they can be hydrophobized on their surfaces to enhance the miscibility with resins or the like.

In the fiber complexes of a fiber and inorganic particles of the present invention, 15 % or more of the surface of the fiber is covered by the inorganic particles, and when the surface of the fiber is covered at such an area ratio, characteristics due to the inorganic particles predominate while characteristics due to the fiber surface are less likely to appear.

In the fiber complexes of a fiber and inorganic particles of the present invention, the inorganic particles rarely drop off even through a disintegration process because the fiber and the inorganic particles bind together to some extent via hydrogen bonds or the like rather than simply being mixed. The binding strength between a fiber and inorganic particles in a fiber complex can be evaluated by, for example, a value such as ash retention (in %), i.e., [(the ash content of a sheet) / (the ash content of the fiber complex before disintegration)] x 100. Specifically, a fiber complex is dispersed in water to adjust the solids content at 0.2 % and disintegrated in a standard disintegrator as defined by JIS P 8220-1: 2012 for 5 minutes, and then formed into a sheet using a 150-mesh wire according to JIS P 8222: 1998, and the ash retention of the sheet thus prepared can be used for the evaluation, wherein the ash retention is 20 % by mass or more in preferred embodiments, and the ash retention is 50 % by mass or more in more preferred embodiments.

Shapes of the fiber complexes

The present invention provides products comprising a fiber complex of a fiber and inorganic particles and used in the form of an aqueous suspension, a pulp, a sheet, a powder, a microsphere, a granule, a pellet, a molding, a yarn, or a foam.

As used herein, the term "aqueous suspension" refers to a mixture of a liquid and a solid having a percent moisture content of 90 % by mass or more and 99 % by mass or less. The term "pulp" refers to a mixture of a liquid and a solid having a lower percent moisture content than those of aqueous suspensions, i.e., a percent moisture content of 10 % by mass or more and less than 90 % by mass. The term "sheet" refers to a thin and broad piece having a percent moisture content of less than 10 % by mass. In this context, the percent moisture content can be determined by the equation below:

Percent moisture content (%) = (weight before drying (g) - weight after drying (g)) / weight after drying (g) x 100 As used herein, the term "powder" refers to a collection of fine or very fine particles having an average particle size of less than 100 μm. The term "microsphere" refers to a particle of a fiber complex molded in a spherical shape having an average particle size of 100 μm or more and less than 1000 μm. The term "granule" refers to a particle having a larger particle size than those of powders, and having an average particle size of 1 mm or more and less than 10 mm.

The term "pellet" refers to a compression-molded small ball of a fiber complex.

The term "molding" refers to a molded object produced by pouring a fiber complex of a fiber and inorganic particles into a mold and dehydrating it.

The term "yarn" refers to a strand of a fiber complex produced by yarn formation. An example of a yarn produced by yarn formation includes a paper yarn. The term "paper yarn" refers to a yarn made from paper. Specifically, it refers to a yarn made by twisting a paper tape sliced from a roll of paper into cross sections of about 1 to 30 mm in thickness. Other yean formation means by which a yarn can be prepared include spinning involving extrusion through small orifices to form continuous strands, drawing, heat setting and the like.

The term "foam" refers to a fiber complex containing bubbles.

According to a preferred embodiment of this aspect, a product comprising a fiber complex of a fiber and inorganic particles can be prepared by a process comprising the steps of: synthesizing inorganic particles in a solution in the presence of a fiber to synthesize a fiber complex of the fiber and the inorganic particles; and adjusting the moisture content of the fiber complex of the fiber and the inorganic particles. In an embodiment of the present invention, bubbles can be formed by agitating a slurry containing a complex of inorganic particles and a fiber with a cellulose nanofiber using an agitator. In this embodiment, bubbles obtained from a slurry containing a complex of calcium carbonate and a fiber have higher viscosity and therefore they are easier to handle as compared with bubbles obtained from complexes with other inorganic particles.

The agitation speed during foaming is not specifically limited, but preferably 1000 to 10000 rpm, more preferably 2000 to 9000 rpm, still more preferably 4000 to 7000 rpm.

The agitator used in the present invention should allow for high speed agitation. The impeller of the agitator is preferably in the form of a three-blade impeller, for example. Preferred agitators include, for example, dispersers such as MULTI DISPERSER PB95 (from SMT Co., Ltd.).

In another embodiment according to the present invention, bubbles (foams) can also be formed by using an extrusion molding machine or the like. Thus, bubbles can be created in a material by kneading and extruding it through the nozzle of an extrusion die and allowing water to evaporate at atmospheric pressure.

In the present invention, a foam having a desired shape can be prepared using a mold, or foams having various shapes can be prepared by allowing the created bubbles to coalesce into a desired shape before they harden.

In the present invention, a foam is prepared by drying the created bubbles at a temperature of, for example, 50 to 150 °C, more preferably 70 to 130 °C, still more preferably 90 to 110 °C.

In a preferred embodiment of the present invention, foaming can be promoted by adding a surfactant to the slurry containing a complex. The surfactant used may be any of cationic, anionic, and nonionic surfactants. Among them, an anionic surfactant is preferably used.

The foam of the present invention can contain an inorganic powder such as, for example, precipitated calcium carbonate or ground calcium carbonate, and the powder may assume any particle shape including regular shapes such as spherical shape, irregular shapes, whisker-like shape and the like. The average particle size is not specifically limited either, but may be 0.5 to 5 $\mu$m, for example. Calcium carbonate can also be used after it has been surface-treated with a fatty acid such as stearic acid, palmitic acid or lauric acid or a salt of any one of such fatty acids and an alkali metal or the like.

In the present invention, a retention aid for papermaking may be added to the slurry containing a complex to improve the retention of fine fibers or inorganic matter (ash). Further, it is also possible to improve the stability of bubbles and the strength of the foam by adding a retention aid. The retention aid used may be either positively or negatively charged on the surface, but more preferably positively charged on the surface. For example, it is Himoloc ND-300 (from HYMO CORPORATION).

In a preferred embodiment of the present invention, a paper strength additive can be added to the slurry containing a complex. The paper strength additive used in the present invention can be, for example, a wet strength additive, a dry strength additive or the like. For example, wet strength additives include WS-2024 (from SEIKO PMC CORPORATION), and dry strength additives include Harmide C-10 (from Harima Chemicals Group, Inc.). Among them, wet strength additives are preferred. Paper strength additives that can be suitably used include hydrophilic polymer materials such as starch, pectin, guar gum, gum arabic, alginic acid and the like, for example.

The foam of the present invention can also contain resins such as polyolefin resins and vinyl chloride resins. Polyolefin resins that can be used include, for example, polypropylene, polyethylene and the like. To save costs and promote recycling, recycled polyolefin resins can also be used. Vinyl chloride resins that can be suitably used include PVCs with a low degree of polymerization, PVCs with a high degree of polymerization and the like, and not only virgin resins but also recycled resins (soft vinyl chloride resins and the like) may be used. Further, the foam of the present invention may also contain plasticizers. Plasticizers that can be suitably used include, for example, phthalate plasticizers, trimellitate plasticizers, fatty acid plasticizers, epoxy plasticizers, adipate plasticizers, polyester plasticizers and the like.

The step of adjusting the moisture content of the fiber complex of the fiber and the inorganic particles can be performed by using a centrifugal dehydrator, a sedimentation thickener, a solid-liquid separator or the like as a device for adjusting the moisture content. Examples of solid-liquid separators that can be used include concentrators/dehydrators such as decanters, screw decanters, disc filters, DNT washers, FUNDABAC filters, nip washers, suction filters and the like; pressure dehydrators such as filter presses, compact washers, drum filters, belt presses, tube presses and the like; vacuum drum filters such as Oliver filters and the like.

An aqueous suspension containing a fiber complex of a fiber and inorganic particles can be obtained by adjusting the percent moisture content to 90 % by mass or more and 99 % by mass or less in the step of adjusting the moisture content of the fiber complex of the fiber and the inorganic particles. In this step, the percent moisture content can be adjusted to 92 % by mass or more and 97 % by mass or less, or the percent moisture content can be adjusted to 94 % by mass or more and 95 % by mass or less.

Further, a pulp containing a fiber complex of a fiber and inorganic particles can be prepared by adjusting the percent moisture content to 10 % by mass or more and less than 90 % by mass. In this step, the percent moisture content can be adjusted to 20 % by mass or more and 80 % by mass or less, or the percent moisture content can be adjusted to 30 % by mass or more and 60 % by mass or less.

Furthermore, a sheet containing a fiber complex of a fiber and inorganic particles can be prepared by adjusting the percent moisture content to less than 10 % by mass. In this step, the percent moisture content can be adjusted to 1 % by mass or more and 8 % by mass or less, or the percent moisture content can be adjusted to 3 % by mass or more and 6 % by mass or less.

In the process of preparing a sheet comprising a fiber complex of a fiber and inorganic particles, Fourdrinier machines, machines using a short wire cloth called Tanmo machines, cylinder machines, inclined wire machines, hybrid formers and the like can be used.

According to a preferred embodiment, a product comprising a fiber complex of a fiber and inorganic particles can be prepared by a process comprising the steps of: synthesizing inorganic particles in a solution in the presence of a fiber to synthesize a fiber complex of the fiber and the inorganic particles; and adjusting the particle size of the fiber complex of the fiber and the inorganic particles.

In the step of adjusting the particle size of the fiber complex of the fiber and the inorganic particles, the particle size can be determined by electron microscopic observation or laser diffraction particle size distribution analysis. Further, inorganic particles having various sizes or shapes can be complexed with a fiber to form a fiber complex by controlling the conditions under which the inorganic particles are synthesized.

Means for adjusting the particle size of the fiber complex of the fiber and the inorganic particles include, for example, ball mills, sand grinder mills, impact mills, high pressure homogenizers, low pressure homogenizers, Dyno mills, ultrasonic mills, Kanda grinders, attritors, millstone type mills, vibration mills, cutter mills, jet mills, disintegrators, beaters, single screw extruders, twin screw extruders, ultrasonic stirrers, juicers/mixers for home use, roller compactors, etc.

A powder containing a fiber complex of a fiber and inorganic particles can be prepared by adjusting the average particle size of the fiber complex of the fiber and the inorganic particles to less than 100 $\mu$m in the step of adjusting the particle size of the fiber complex of the fiber and inorganic particles Preferably, the average particle size of the fiber complex of the fiber and the inorganic particles can be 1 $\mu$m or more and less than 90 $\mu$m, or the average particle size of the fiber complex of the fiber and the inorganic particles can be 10 $\mu$m or more and less than 80 $\mu$m.

A microsphere containing a fiber complex of a fiber and inorganic particles can be prepared by adjusting the average particle size of the fiber complex of the fiber and the inorganic particles to 100 $\mu$m or more and less than 1000 $\mu$m in the step of adjusting the particle size of the fiber complex of the fiber and the inorganic particles. Preferably, the average particle size of the fiber complex of the fiber and the inorganic particles can be 200 $\mu$m or more and less than 800 $\mu$m, or the average particle size of the fiber complex of the fiber and the inorganic particles can be 300 $\mu$m or more and less than 600 $\mu$m.

A granule containing a fiber complex of a fiber and inorganic particles can be prepared by adjusting the average particle size of the fiber complex of the fiber and the inorganic particles to 1 mm or more and less than 10 mm in the step of adjusting the average particle size of the fiber complex of the fiber and the inorganic particles. Preferably, the average particle size of the fiber complex of the fiber and the inorganic particles can be 2 mm or more and less than 8 mm, or the average particle size of the fiber complex of the fiber and the inorganic particles can be 3 mm or more and less than 6 mm.

Further according to a preferred embodiment, a pellet containing a fiber complex of a fiber and inorganic particles can be prepared by synthesizing inorganic particles in a solution in the presence of a fiber to synthesize a fiber complex of the fiber and the inorganic particles; and then pelletizing the complex of the fiber and the inorganic particles. Pelletizing means include pelletizers and the like.

Alternatively, the fiber complex of the fiber and the inorganic particles can be pelletized after the percent moisture content has been adjusted to 45 % by mass or more and 85 % by mass or less, preferably 50 % by mass or more and 70 % by mass or less by separating solids and liquids using a solid-liquid separator as described above.

According to a preferred embodiment, a molding containing a fiber complex of a fiber and inorganic particles can be prepared by the steps of: synthesizing inorganic particles in a solution in the presence of a fiber to synthesize a fiber complex of the fiber and the inorganic particles; and pouring the fiber complex of the fiber and the inorganic particles into a mold and dehydrating it.

According to a preferred embodiment, a yarn containing a fiber complex of a fiber and inorganic particles can be prepared by the steps of: synthesizing inorganic particles in a solution in the presence of a fiber to synthesize a fiber complex of the fiber and the inorganic particles; and subjecting the fiber complex of the fiber and the inorganic particles to yarn formation. Examples of yarn formation include paper yarn formation (yarn twisting), spinning, drawing, heat setting and the like. In the case of paper yarn formation (yarn twisting), the step of subjecting the fiber complex of the fiber and the inorganic particles to yarn twisting is preferably preceded by the step of slitting a sheet containing the fiber complex of the fiber and the inorganic particles adjusted to a percent moisture content of less than 10 % by mass. Further, the yarn preferably has a fiber diameter of 1 mm or more and 10 mm or less. Slitting means include slitters and the like.

According to a preferred embodiment, a foam containing a fiber complex of a fiber and inorganic particles can be prepared by the steps of: synthesizing inorganic particles in a solution in the presence of a fiber to synthesize a fiber complex of the fiber and the inorganic particles; and agitating the fiber complex of the fiber and the inorganic particles using an agitator.

Means used for agitation include homogenizers, dispersers and the like. The agitation speed can be 6000 rpm or more and less than 10000 rpm, or 7000 rpm or more and less than 9000 rpm.

Preferably, the foam has a density in the range of 0.01 to 0.1 g/cm$^3$. In this context, the density can be determined by the equation below:

$$\text{Density (g/cm}^3) = \text{the mass of the foam (g) / the volume of the foam (cm}^3)$$

The dryer for drying the fiber complex of the fiber and the inorganic particles is not specifically limited either, but air stream dryers, band dryers, spray dryers and the like can be suitably used, for example.

Applications of the fiber complexes

Products comprising the fiber complexes obtained by the present invention can be mixed with other products to give mixtures. The products or mixtures of the present invention can be used for various applications and they can be widely used for any applications including, for example, papers, fibers, cellulosic composite materials, filter materials, paints, plastics and other resins, rubbers, elastomers, ceramics, glasses, tires, building materials (asphalt, asbestos, cement, boards, concrete, bricks, tiles, plywoods, fiber boards and the like), various carriers (catalyst carriers, drug carriers, agrochemical carriers, microbial carriers and the like), adsorbents (decontaminants, deodorants, dehumidifying agents and the like), anti-wrinkle agents, clay, abrasives, modifiers, repairing materials, thermal insulation materials, damp proofing materials, water repellent materials, waterproofing materials, light shielding materials, sealants, shielding materials, insect repellents, adhesives, inks, cosmetics, medical materials, paste materials, discoloration inhibitors, food additives, tablet excipients, dispersants, structuring agents, water retention agents, filter aids, oil rectification additives, oil processing additives, oil reforming additives, electromagnetic wave absorbers, insulating materials, acoustic insulation materials, vibration damping materials, semiconductor sealing materials, radiation shielding materials, cosmetic products, fertilizers, feedstuffs, perfumes, additives for paints and adhesives, flame retardant materials, sanitary products (disposable diapers, sanitary napkins, incontinence pads, nursing pads, etc.) and the like. They also can be used for various fillers, coating agents and the like in the applications mentioned above. The fiber complexes of the present invention may also be applied for papermaking purposes including, for example, printing papers, newsprint papers, inkjet printing papers, PPC papers, kraft papers, woodfree papers, coated papers, coated fine papers, wrapping papers, thin papers, colored woodfree papers, cast-coated papers, carbonless copy papers, label papers, heat-sensitive papers, various fancy papers, water-soluble papers, release papers, process papers, hanging base papers, incombustible papers, flame retardant papers, base papers for laminated boards, printed electronics papers, battery separators, cushion papers, tracing papers, impregnated papers, papers for ODP, building papers, papers for decorative building materials, envelope papers, papers for tapes, heat exchange papers, chemical fiber papers, aseptic papers, water resistant papers, oil resistant papers, heat resistant papers, photocatalytic papers, cosmetic papers (facial blotting papers and the like), various sanitary papers (toilet papers, facial tissues, wipers, diapers, menstrual products and the like), cigarette rolling papers, paperboards (liners, corrugating media, white paperboards and the like), base papers for paper plates, base papers for paper cups, baking papers, abrasive papers, synthetic papers and the like. Thus, the present invention makes it possible to provide fiber complexes of inorganic particles having a small primary particle size and a narrow particle size distribution and a fiber so that they can exhibit different properties from those of conventional inorganic fillers having a particle size of more than 1 μm. Further, the fiber complexes of inorganic particles and a fiber can be formed into sheets in which the inorganic particles are not only more readily retained but also uniformly dispersed rather than being aggregated in contrast to cases where inorganic particles are simply incorporated into a fiber. In a preferred embodiment, the inorganic particles in the present invention are not only adhered to the outer surface and the inside of the lumen of the fiber but also produced within the microfibrils, as evidenced by the results of electron microscopic observation.

Further, the fiber complexes obtained by the present invention can be used in combination with particles commonly known as inorganic fillers and organic fillers or various fibers. For example, the inorganic fillers include calcium carbonate (precipitated calcium carbonate, ground calcium carbonate), magnesium carbonate, barium carbonate, aluminum hydroxide, calcium hydroxide, magnesium hydroxide, zinc hydroxide, clay (kaolin, calcined kaolin, delaminated kaolin), talc, zinc oxide, zinc stearate, titanium dioxide, silica-containing products prepared from sodium silicate and a mineral acid (white carbon, silica/calcium carbonate fiber complexes, silica-/titanium dioxide fiber complexes), terra alba, bentonite, diatomaceous earth, calcium sulfate, zeolite, inorganic fillers recycled from ash obtained in a deinking process and inorganic fillers consisting of fiber complexes formed with silica or calcium carbonate during the recycling process, etc. In addition to calcium carbonate-silica complexes such as calcium carbonate and/or precipitated calcium carbonate-silica complexes, amorphous forms of silica such as white carbon can also be used. The organic fillers include urea-formaldehyde resins, polystyrene resins, phenol resins, hollow microparticles, acrylamide fiber complexes, wood-derived materials (microfibers, microfibrillar fibers, kenaf powders), modified/insolubilized starches, ungelatinized starches and the like. Fibers that can be used include, without limitation, not only natural fibers such as celluloses but also synthetic fibers artificially synthesized from raw materials such as petroleum, regenerated fibers (semisynthetic fibers) such as rayon and lyocell, and even inorganic fibers and the like. In addition to the examples mentioned above, natural fibers include protein fibers such as wool and silk yarns and collagen fibers; composite carbohydrate fibers such as chitin/chitosan fibers and alginate fibers and the like. Examples of cellulosic raw materials include pulp fibers (wood pulps and non-wood pulps), bacterial celluloses, animal-derived celluloses such as Ascidiacea, algae, etc., among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof. The technique for pulping the wood raw materials is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching). Examples of non-wood pulps include cotton, hemp, sisal (Agave sisalana), abaca (Musa textilis), flax, straw, bamboo, bagas, kenaf, sugar cane, corn, rice straw, Broussonetia kazinoki × B. papyrifera, Edgeworthia chrysantha and the like. The wood pulps and non-wood pulps may be unbeaten or beaten. Moreover, these cellulosic raw materials can be further treated so that they can also be used as pulverized celluloses such as powdered celluloses, chemically modified celluloses such as oxidized celluloses, and cellulose nanofibers (CNFs) (microfibrillated celluloses (MFCs), TEMPO-oxidized CNFs, phosphate esters of CNFs, carboxymethylated CNFs, mechanically ground CNFs). Synthetic fibers include polyesters, polyamides, polyolefins, and acrylic fibers; semisynthetic fibers include rayon, acetate and the like; and inorganic fibers include glass fibers, carbon fibers, various metal fibers and the like. All these may be used alone or as a combination of two or more of them.

Further, various organic materials such as polymers or various inorganic materials such as pigments may be added later to molded objects of the fiber complexes.

EXAMPLES

The following examples further illustrate the present invention, but the present invention is not limited to these examples. Unless otherwise specified, the concentrations, parts and the like as used herein are based on weight, and the numerical ranges are described to include their endpoints.

Experiment A

Sample 1: An aqueous suspension containing a fiber complex of magnesium carbonate microparticles and a fiber

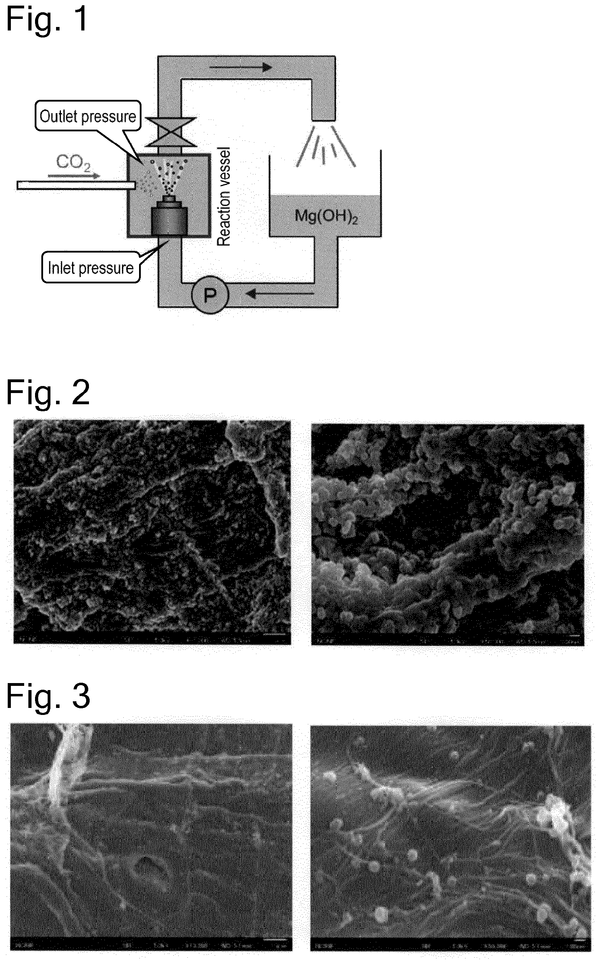

An aqueous suspension containing 140 g of magnesium hydroxide (from Wako Pure Chemical Industries, Ltd.) and 140 g of a bleached hardwood kraft pulp (LBKP, CSF: 370 ml, average fiber length: 0.75 mm) was provided. A 45-L cavitation system shown in Fig. 1 was charged with 14 L of this aqueous suspension and carbonic acid gas was injected into the reaction vessel while circulating the reaction solution to synthesize a fiber complex of magnesium carbonate microparticles and a fiber by the carbonation process. The reaction temperature was about 36 °C, the carbonic acid gas source was a commercially available liquefied gas, and the injection flow rate of the carbonic acid gas was 4 L/min. When the pH of the reaction mixture reached about 7.8 (from the pH of about 9.5 before the reaction), the injection of $CO_2$ was stopped, after which the generation of cavitation and the circulation of the slurry within the system were continued for 30 minutes to give Sample 1 (percent moisture content: 96 % by mass). The weight ratio of fiber : inorganic particles in the resulting fiber complex was 45:55. In this context, the weight ratio was calculated based on the ash content determined from the ratio between the weight of ash remaining after the fiber complex was heated at 525 °C for about 2 hours and the original solids content (JIS P 8251: 2003).

During the synthesis of the fiber complex, cavitation bubbles were generated in the reaction vessel by injecting the reaction solution into the reaction vessel while circulating it, as shown in Fig. 1. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

Sample 2: An aqueous suspension containing a fiber complex of magnesium carbonate microparticles and a fiber (without CV)

Sample 2 (moisture content: 96 % by mass) was obtained in the same manner as described for Sample 1 except that a 3-L stainless steel vessel was used as a reaction vessel and charged with 20 g of the pulp, the injection flow rate of the carbonic acid gas was 0.57 L/min, and the carbonation reaction was performed in a water bath at 35 °C with stirring using a Three-One Motor agitator (800 rpm). The weight ratio of fiber : inorganic particles in the resulting fiber complex was 45:55.

Sample 3: An aqueous suspension containing a fiber complex of barium sulfate particles and a fiber

A 1 % pulp slurry (LBKP/NBKP = 8/2, 500 g) and barium hydroxide octahydrate (from Wako Pure Chemical Industries, Ltd., 5.82 g) were mixed using a Three-One Motor agitator (1000 rpm), and then sulfuric acid (from Wako Pure Chemical Industries, Ltd., 2.1g) was added dropwise. After completion of the dropwise addition, stirring was continued for 30 minutes to give Sample 3 (moisture content: 96.0%). The pulp mixture used had an average fiber length of 1.21 mm as determined by a fiber tester (from Lorentzen & Wettre). The weight ratio of fiber : inorganic particles in the resulting fiber complex was 56:44.

Sample 4: An aqueous suspension containing a fiber complex of barium sulfate particles and an aramid fiber

Sample 4 (moisture content: 98.4%) was synthesized in the same manner as described for Sample 1 except that a 0.8 % slurry of an aramid fiber (Twaron RD-1094 from TEIJIN LIMITED, 625 g) was used as the fiber component.

The resulting fiber complex slurry (3 g on a solids basis) was filtered through a filter paper under suction, and then the residue was dried in an oven (at 105 °C for 2 hours) and the ash content was determined to show that the weight ratio of fiber : inorganic particles in the fiber complex was 55:45.

Sample 5: An aqueous suspension containing a fiber complex of aluminum hydroxide particles and a fiber

A 1 % pulp slurry (LBKP/NBKP = 8/2, 500 g) and an aqueous aluminum sulfate solution (11 g as $Al_2(SO)_4$) were mixed using a Three-One Motor agitator (1000 rpm), and then an aqueous solution (concentration 5 %) of sodium hydroxide (from Wako Pure Chemical Industries, Ltd., 15.4 g) was added dropwise. After completion of the dropwise addition, stirring was continued for 30 minutes to give Sample 5 (moisture content: 98.0%).

The weight ratio of fiber : inorganic particles in the resulting fiber complex was 58:42.

Sample 6: A pulp containing a fiber complex of a hydrotalcite and a fiber

(1) Preparation of an alkaline solution and acid solutions

Solutions for synthesizing a hydrotalcite (HT) were prepared. An aqueous mixed solution of $Na_2CO_3$ (from Wako Pure Chemical Industries, Ltd.) and NaOH (from Wako Pure Chemical Industries, Ltd.) was prepared as an alkaline solution (solution A). On the other hand, an aqueous mixed solution of $MgCl_2$ (from Wako Pure Chemical Industries, Ltd.) and $AlCl_3$ (from Wako Pure Chemical Industries, Ltd.) and an aqueous mixed solution of $ZnCl_2$ (from Wako Pure Chemical Industries, Ltd.) and $AlCl_3$ (from Wako Pure Chemical Industries, Ltd.) were prepared as acid solutions (solutions B).

- Alkaline solution (solution A; $Na_2CO_3$ concentration 0.05 M; NaOH concentration 0.8 M);
- Acid solution (solution B, Mg-based; $MgCl_2$ concentration 0.3 M; $AlCl_3$ concentration 0.1 M);
- Acid solution (solution B, Zn-based; $ZnCl_2$ concentration 0.3 M; $AlCl_3$ concentration 0.1 M).

(2) Synthesis of a fiber complex

A 10-L reaction vessel was charged with the alkaline solution, and the acid solution (Mg-based) was added dropwise with stirring to synthesize hydrotalcite microparticles ($Mg_6Al_2(OH)_{16}CO_3.4H_2O$). The reaction temperature was 60 °C, and the dropwise addition rate was 15 ml/min, and when the pH of the reaction mixture reached about 7, the dropwise addition was stopped. After completion of the dropwise addition, the reaction mixture was stirred for 30 minutes, and washed with about 10 volumes of water to remove the salt.

A cellulose fiber was used as the fiber to be complexed. Specifically, a pulp fiber was used, which comprises a bleached hardwood kraft pulp (LBKP from Nippon Paper Industries Co., Ltd.) and a bleached softwood kraft pulp (NBKP from Nippon Paper Industries Co., Ltd.) in a weight ratio of 8:2 and which has been adjusted to a Canadian standard freeness of 390 ml using a single disc refiner (SDR).

The pulp fiber was added to the alkaline solution to provide an aqueous suspension containing the pulp fiber (pulp fiber consistency 1.56 %, pH about 12.4). A 10-L reaction vessel was charged with this aqueous suspension (pulp solids 30 g), and the acid solution (Mg-based) was added dropwise while stirring the aqueous suspension to synthesize a fiber complex of hydrotalcite microparticles and the fiber. A system as shown in Fig. 1 was used at a reaction temperature of 60 °C and a dropwise addition rate of 15 ml/min, and when the pH of the reaction mixture reached about 7, the dropwise addition was stopped. After completion of the dropwise addition, the reaction mixture was stirred for 30 minutes, and washed with about 10 volumes of water to remove the salt.

The fiber complex synthesized was converted into a pulp using a filter press (from NIPPON COLOR Ind. Co., Ltd.) to give Sample 6 (moisture content: 62.5 % by mass). The weight ratio of fiber : inorganic particles in the resulting fiber complex was 56: 44.

Sample 7: A pulp containing a fiber complex of barium sulfate particles and a fiber

The fiber complex synthesized as Sample 3 was used and converted into a pulp using a filter press (from Fuji Paudal Co., Ltd.) to give Sample 7 (moisture content: 65.0 % by mass). The weight ratio of fiber : inorganic particles in the resulting fiber complex was 56: 44.

Sample 8: A sheet containing a fiber complex of calcium carbonate particles and a fiber

An aqueous suspension in an amount of 30 L containing calcium hydroxide (slaked lime $Ca(OH)_2$, 300 g) and a bleached softwood kraft pulp (NBKP, Canadian standard freeness CSF: 215 mL, 300 g) was provided. A 40-L closed system was charged with this aqueous suspension and carbonic acid gas was injected into the reaction vessel to generate cavitation, whereby a fiber complex of calcium carbonate particles and a fiber was synthesized by the carbonation process. The reaction temperature was about 25 °C, the carbonic acid gas source was a commercially available liquefied gas, and the injection flow rate of the carbonic acid gas was 12 L/min, and when the pH of the reaction mixture reached about 7 (from the pH of about 12.8 before the reaction), the reaction was stopped. The weight ratio of fiber : inorganic particles in the resulting fiber complex was 45: 55.

During the synthesis of the fiber complex, cavitation bubbles were generated in the reaction vessel by injecting the reaction solution into the reaction vessel while circulating it, as shown in Fig. 1. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

To the resulting fiber complex (consistency: 1 %) was added 100 ppm on a solids basis each of a cationic retention aid (ND300 from HYMO CORPORATION) and an anionic retention aid (FA230 from HYMO CORPORATION) to prepare a stock slurry. Then, a sheet was prepared from this stock slurry using a Fourdrinier machine under the conditions of a machine speed of 10 m/min to give Sample 8 (moisture content: 8.0 % by mass). As a control, a sheet was prepared from a pulp slurry (LBKP/NBKP = 8/2, CSF = 390 mL, average fiber length: 1.5 mm) containing 100 ppm on a solids basis each of a cationic retention aid (ND300 from HYMO CORPORATION) and an anionic retention aid (FA230 from HYMO CORPORATION) using a Fourdrinier machine. The weight ratio of fiber : inorganic particles in the resulting fiber complex was 56: 44.

Sample 9: A sheet containing a fiber complex of magnesium carbonate particles and a fiber

The residue remaining after filtering Sample 1 through a filter paper under suction was dispersed in tap water to prepare a slurry having a consistency of about 0.2 %. This slurry was disintegrated in a standard disintegrator as defined by JIS P 8220-1: 2012 for 5 minutes, and then a handsheet having a basis weight of 60 g/m$^2$ was prepared according to JIS P 8222: 1998 using a 150-mesh wire, thereby giving Sample 9 (moisture content 8.0 % by mass). The weight ratio of fiber : inorganic particles in the resulting fiber complex was 56: 44.

Sample 10: A powder containing a fiber complex of calcium carbonate microparticles and a fiber

<Synthesis of a fiber complex of calcium carbonate and a fiber >

An aqueous suspension containing calcium hydroxide (slaked lime Ca (OH)$_2$ from Wako Pure Chemical Industries, Ltd., 2 % by weight) and a fiber (0.5 %, LBKP/NBKP = 8/2, 500 g) was provided. A 45-L cavitation system was charged with 9.5 L of this aqueous suspension and carbonic acid gas was injected into the reaction vessel to synthesize a fiber complex of calcium carbonate microparticles and the fiber by the carbonation process. The reaction temperature was about 25 °C, the carbonic acid gas source was a commercially available liquefied gas, and the injection flow rate of the carbonic acid gas was 12 L/min, and when the pH of the reaction mixture reached about 7 (from the pH of about 12.8 before the reaction), the reaction was stopped.

During the synthesis of the fiber complex, cavitation bubbles were generated in the reaction vessel by injecting the reaction solution into the reaction vessel while circulating it, as shown in Fig. 1. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

The resulting fiber complex was dried with a spray dryer (from Ohkawara Kakohki Co., Ltd.) to prepare a powder, thereby giving Sample 10 (particle size: 100 $\mu$m). The weight ratio of fiber : inorganic particles was 45: 55.

Sample 11: A powder containing a fiber complex of calcium carbonate microparticles and a fiber

A powder was prepared in the same manner as described for Sample 10 except that the bleached softwood kraft pulp was replaced by a powdered cellulose (KC FLOCK W-06MG from Nippon Paper Industries Co., Ltd.), thereby giving Sample 11 (particle size: 100 $\mu$m). The weight ratio of fiber : inorganic particles was 43: 57.

Sample 12: Microspheres containing a fiber complex of magnesium carbonate particles and a fiber

Sample 1 was used to prepare microspheres using an extruder/kneader/granulator (from KANSAIKIKI SEISAKUSHO CO., LTD.), thereby giving Sample 12 (particle size: 800 $\mu$m). The weight ratio of fiber : inorganic particles was 47: 53.

Sample 13: Granules containing a fiber complex of magnesium carbonate particles and a fiber

Sample 1 was used to prepare granules using ROLLER COMPACTOR (from MATSUBO Corporation), thereby giving Sample 13 (particle size: 6 mm). The weight ratio of fiber : inorganic particles was 44: 56.

Fiber complexes of inorganic particles and a fiber with higher percent moisture contents (Samples 1 to 5) could be prepared more efficiently at lower production costs in shorter production processes as compared with fiber complexes of inorganic particles and a fiber with lower percent moisture contents (Samples 6 to 13). On the other hand, fiber complexes of inorganic particles and a fiber with lower percent moisture contents (Samples 6 to 13) could be more readily transferred or incorporated into products as compared with fiber complexes of inorganic particles and a fiber with higher percent moisture contents (Samples 1 to 5) and a fiber complex sheet prepared without lamination (Comparative example 1).

Sample 14: Pellets containing a fiber complex of magnesium carbonate particles and a fiber

Sample 1 was used to prepare pellets (having a bone dry weight of 4 g and a pellet diameter of 35 mm) using a pelletizer (from Fuji Paudal Co., Ltd.).

Sample 15: Pellets containing a fiber complex of magnesium carbonate particles and a powdered cellulose

Sample 15 (having a bone dry weight of 4 g and a pellet diameter of 35 mm) was obtained in the same manner as described for Sample 14 except that the bleached softwood kraft pulp was replaced by a powdered cellulose (KC FLOCK W-06MG from Nippon Paper Industries Co., Ltd.).

Sample 16: A molding containing a fiber complex of magnesium carbonate particles and a fiber

Sample 1 was used to prepare a molding using an injection molding machine (from RheoLab Ltd.), thereby giving Sample 16.

Sample 17: A paper yarn containing a fiber complex of magnesium carbonate particles and a fiber

The sheet of Sample 9 was processed to a width of 8 mm using a slitter, and then processed using a twisting machine to give a paper yarn of 1 mm in diameter.

Sample 18: A foam containing a fiber complex of calcium carbonate particles and a fiber

A fiber complex of calcium carbonate particles and a powdered cellulose was obtained in the same manner as described for Sample 10 except that the bleached softwood kraft pulp was replaced by a powdered cellulose (KC FLOCK W-06MG from Nippon Paper Industries Co., Ltd.). The resulting fiber complex was stirred at 6000 rpm using a Three-One Motor agitator for 5 minutes. Then, the resulting sample (12 g) was placed in an aluminum cup and dried in a dryer at 60 °C for 24 hours to prepare a foam (density: 0.06 g/cm$^3$), thereby giving Sample 18.

Fiber complexes of inorganic particles and a fiber in the form of a pellet, a molding, a paper yarn, or a foam (Samples 14 to 18) provide products having excellent handling properties and combining the functions of the fiber complexes of the fiber and the inorganic particles (flame retardancy, opacity, radiation shielding properties, adsorptivity, antimicrobial properties and the like) in single products.

Experiment 1: Preparation of complexes of inorganic particles and a fiber

Complexes of inorganic particles and a pulp fiber were synthesized by the procedures shown below and used in Experiment 3.

(Sample 1: A complex of calcium carbonate and a pulp fiber, Fig. 2)

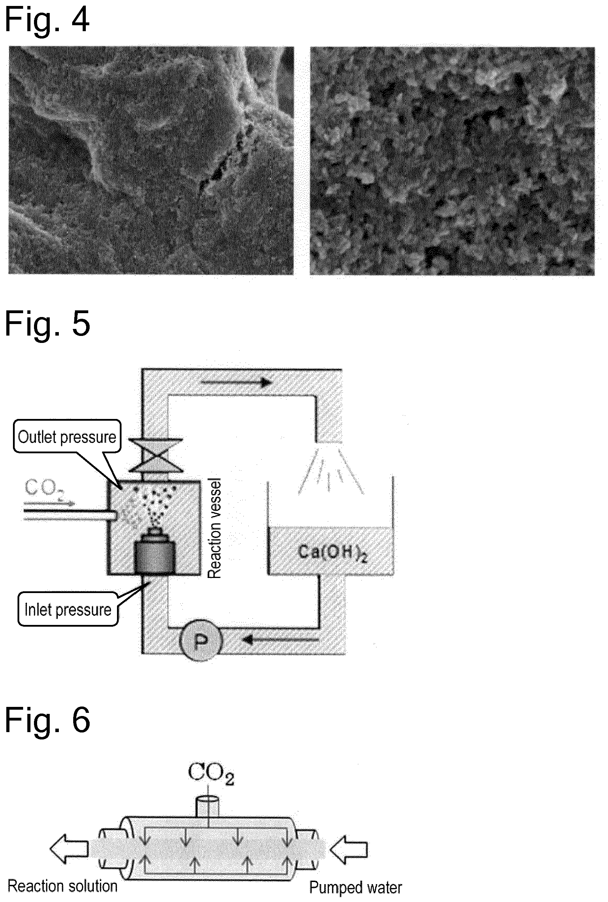

A complex of calcium carbonate and a fiber was synthesized by the carbonation process using a reaction system as shown in Fig. 5. An aqueous suspension in an amount of 1500 L containing 15 kg of calcium hydroxide (TamaAce U from OKUTAMA KOGYO CO., LTD.) and 15 kg of LBKP (CSF = 500 mL, average fiber length = 0.76 mm) was provided and the reaction mixture was circulated at a pumping flow rate of 80 L/min using an ultrafine bubble generator (a UFB generator YJ-9 from ENVIRO VISION CO., LTD., Fig. 6) (at a jet flow rate from the nozzle of 125 L/min.cm$^2$). A lot of ultrafine bubbles (having a diameter of 1 μm or less and an average particle size of 137 nm) containing carbonic acid gas were generated in the reaction mixture by injecting carbonic acid gas through the intake port of the ultrafine bubble generator to synthesize calcium carbonate particles on the pulp fiber. The reaction was performed at a reaction temperature of 20 °C and a carbonic acid gas injection flow rate of 20 L/min, and when the pH of the reaction mixture reached about 7 (from the pH of about 13 before the reaction), the reaction was stopped to give Sample 2. The resulting complex of calcium carbonate and a pulp fiber had an ash content of 53 %, and the inorganic particles had an average primary particle size of 50 nm.

(Sample 2: A complex of magnesium carbonate and a pulp fiber, Fig. 3)

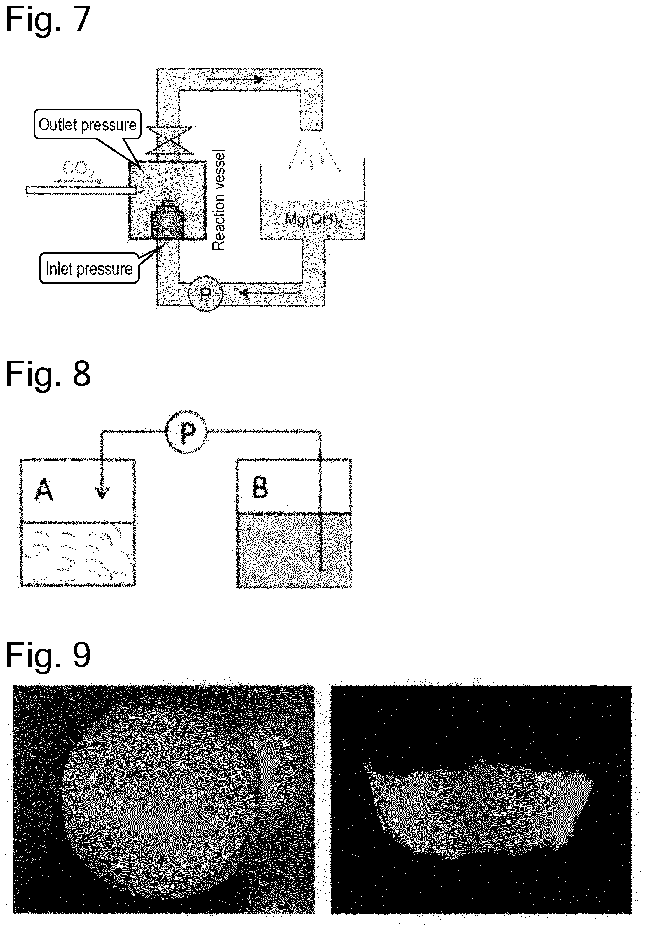

An aqueous suspension was provided by adding 350 g of magnesium hydroxide (UD653 from Ube Material Industries, Ltd.) and 350 g of a kraft pulp (LBKP/NBKP = 1/1, CSF: 370 ml, average fiber length: 0.9 mm) into water.
As shown in Fig. 7, a cavitation system (having a capacity of 45 L) was charged with 35 L of this aqueous suspension and carbonic acid gas was injected into the reaction vessel while circulating the reaction solution to synthesize a complex of magnesium carbonate microparticles and a fiber by the carbonation process. The initial reaction temperature was about 40 °C, the carbonic acid gas source was a commercially available liquefied gas, and the injection flow rate of the carbonic acid gas was 20 L/min. When the pH of the reaction mixture reached about 7.8 (from the pH of about 10.3 before the reaction), the injection of CO$_2$ was stopped, after which the generation of cavitation and the circulation of the slurry within the system were continued for 30 minutes to give a complex of magnesium carbonate microparticles and a pulp fiber (wherein the inorganic particles had an average primary particle size of 1.0 $\mu$m).

During the synthesis of the complex, cavitation bubbles were generated in the reaction vessel by injecting the reaction solution into the reaction vessel while circulating it. Specifically, cavitation bubbles were generated by injecting the reaction solution through a nozzle (nozzle diameter: 1.5 mm) under high pressure at a jet flow rate of about 70 m/s, an inlet pressure (upstream pressure) of 2 MPa and an outlet pressure (downstream pressure) of 0.2 MPa.

The weight ratio of fiber : inorganic particles in the resulting complex was determined to be 40 : 60 (ash content: 60 %). The weight ratio (ash content) was calculated from the weight before and after each complex slurry (3 g on a solids basis) was filtered through a filter paper under suction and then the residue was dried in an oven (at 105 °C for 2 hours) and further heated at 525 °C to burn off the organic matter.

(Sample 3: A complex of a hydrotalcite and a pulp fiber, Fig. 4)

To synthesize $Mg_6Al_2(OH)_{16}CO_3.4H_2O$ as a hydrotalcite (HT), an aqueous mixed solution of $Na_2CO_3$ (from Wako Pure Chemical Industries, Ltd.) and NaOH (from Wako Pure Chemical Industries, Ltd.) was prepared as an alkaline solution (solution A), and an aqueous mixed solution of $MgCl_2$ (from Wako Pure Chemical Industries, Ltd.) and $AlCl_3$ (from Wako Pure Chemical Industries, Ltd.) was prepared as an acid solution (solution B).

- Alkaline solution (solution A; $Na_2CO_3$ concentration 0.05 M; NaOH concentration 0.8 M);
- Acid solution (solution B, Mg-based; $MgCl_2$ concentration 0.3 M; $AlCl_3$ concentration 0.1 M).

A cellulose fiber was used as the fiber to be complexed. Specifically, a pulp fiber (having an average fiber length of 0.8 mm) was used, which comprises a bleached hardwood kraft pulp (LBKP from Nippon Paper Industries Co., Ltd.) and a bleached softwood kraft pulp (NBKP from Nippon Paper Industries Co., Ltd.) in a weight ratio of 8:2 and which has been adjusted to a Canadian standard freeness of 390 ml using a single disc refiner (SDR).

The pulp fiber was added to the alkaline solution to provide an aqueous suspension containing the pulp fiber (pulp fiber consistency 1.56 %, pH about 12.4). A 10-L reaction vessel was charged with this aqueous suspension (pulp solids 30 g), and the acid solution (Mg-based) was added dropwise while stirring the aqueous suspension to synthesize a complex of hydrotalcite microparticles and the fiber. A system as shown in Fig. 8 was used at a reaction temperature of 60 °C and a dropwise addition rate of 15 ml/min, and when the pH of the reaction mixture reached about 7, the dropwise addition was stopped. After completion of the dropwise addition, the reaction mixture was stirred for 30 minutes, and washed with about 10 volumes of water to remove the salt, thereby giving Sample 3 (wherein the inorganic particles had an average primary particle size of 20 nm). The ash content of Sample 3 was 50 %.

Experiment 2: Preparation of cellulose nanofibers

(Cationized cellulose nanofiber: cationized CNF)

In a pulper capable of stirring pulp, 200 g on a dry weight basis of a pulp (LBKP from Nippon Paper Industries Co., Ltd.) and 24 g on a dry weight basis of sodium hydroxide were added and water was added in such an amount that the solids content of the pulp was 15 %.

Then, the mixture was stirred at 30 °C for 30 minutes, and then heated to 70 °C, and 190 g (on an active matter basis) of 3-chloro-2-hydroxypropyltrimethylammonium chloride was added as a cationizing agent. After the mixture was reacted for 1 hour, the reaction product was removed and neutralized and washed to give a cationically modified pulp. A 1 % slurry of the cationized pulp was processed using a small size high pressure filter press (model YTOH2 from Yabuta Machinery Co., Ltd.) at 2 MPa for 15 minutes to prepare a cationized cellulose nanofiber (solids content: 7 % by mass).

(Carboxymethylated cellulose nanofiber: CM CNF)

In a reactor capable of stirring pulp, 112 g of an aqueous solution containing 50 % by weight of sodium hydroxide and 67 g of water were added to 250 g on a dry weight basis of a pulp (LBKP from Nippon Paper Industries Co., Ltd.) with stirring. After the mixture was stirred at 30 °C for 30 minutes, 364 g of an aqueous solution containing 35 % by weight of sodium monochloroacetate was added with stirring. Then, the mixture was stirred at 30 °C for 30 minutes, heated to 70 °C over 30 minutes, and reacted at 70 °C for 1 hour. Then, the reaction product was removed and neutralized and washed to give a carboxymethylated cellulose (i.e., carboxymethylated pulp) having a degree of carboxymethyl substitution of 0.25 per glucose unit. A 1 % slurry of the carboxymethylated pulp was processed using a small size high pressure filter press (model YTOH2 from Yabuta Machinery Co., Ltd.) at 2 MPa for 15 minutes to give a cellulose nanofiber.

(TEMPO-oxidized cellulose nanofiber: TEMPO-oxidized CNF)

To 500 ml of an aqueous solution of 78 mg (0.5 mmol) of TEMPO (2,2,6,6-tetramethylpiperidine-1-oxyl from Sigma Aldrich) and 755 mg (7 mmol) of sodium bromide dissolved in water was added 15 g (on a bone dry basis) of a powdered cellulose (having a particle size of 24 μm from Nippon Paper Chemicals, Co., Ltd.), and the mixture was stirred until the powdered cellulose was homogeneously dispersed. After 50 ml of an aqueous sodium hypochlorite solution (5 % active chlorine) was added to the reaction system, the pH was adjusted to 10.3 with a 0.5 N aqueous hydrochloric acid solution and an oxidation reaction was started. As the pH in the system decreased during the reaction, a 0.5 M aqueous sodium hydroxide solution was added as appropriate to adjust the pH at 10. The mixture was reacted for 2 hours, and then centrifuged (at 6000 rpm for 30 minutes at 20 °C) to separate the powdered cellulose thus oxidized, which was thoroughly washed with water to give a desired oxidized powdered cellulose. A 2 % (w/v) slurry of the oxidized powdered cellulose was processed with a mixer at 12000 rpm for 15 minutes, and the powdered cellulose slurry was further processed with an ultra-high pressure homogenizer at a pressure of 140 MPa for five cycles to prepare a desired cellulose nanofiber.

Experiment 3: Preparation and evaluation of foams

(1) Experiment 3-1: Stability of bubbles

(Experiment b) To 395 ml of a stirred slurry (consistency: 1.0 %) of the complex of calcium carbonate and a fiber (Sample 1) synthesized in Experiment 1 were added 1.3 ml of a paper strength additive (WS-2024 from SEIKO PMC CORPORATION at a concentration of 3.0 %), 1.6 ml of a retention aid (ND-300 from HYMO CORPORATION at a concentration of 0.05 %), and 0.24 g of an anionic surfactant (sodium dodecyl sulfate, Wako 1st Grade from Wako Pure Chemical Industries, Ltd.) to prepare a slurry for preparing a foam. This slurry was stirred at 6000 rpm for 10 minutes using a versatile disperser (MULTI DISPERSER SMT from SMT Co., Ltd.) to induce foaming.
(Experiment c) This experiment was performed in the same manner as Experiment b except that foaming was induced after 0.4 g of the cationized cellulose nanofiber prepared in Experiment 2 was further added to the slurry and that calcium carbonate was not added.

(Results)

Comparison between Experiment b and Experiment c shows that the stability of bubbles could be improved by adding a cellulose nanofiber (CNF). The stability of bubbles, which is important for preparing a foam, could be improved by adding a CNF according to the present invention.

(2) Experiment 3-2: Preparation of foams

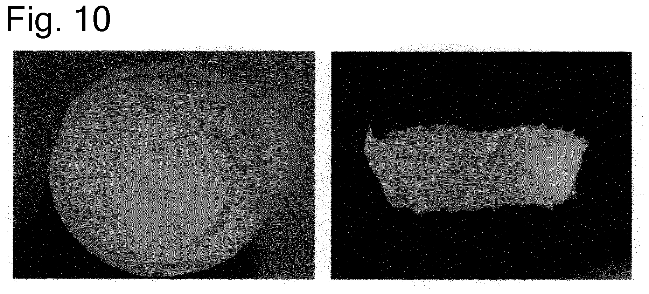

(Foams B to C) The bubbles obtained in Experiments b to c were placed in an aluminum cup (having a diameter of about 7 cm and a height of about 2 cm) and dried using a natural convection incubator (DSN-115S from ISUZU) at 105 °C for 18 hours to give foams (foam C: Fig. 9).
(Foams D to E) Foams were obtained in the same manner as described for foam C except that the cationized CNF was replaced by the CM CNF or TEMPO-oxidized CNF (foam D: CM CNF; foam E: TEMPO-oxidized CNF, Fig. 10).
(Foams F to G) Foams were obtained in the same manner as described for foam C except that the complex of Sample 1 was replaced by the complex of Sample 2 or Sample 3 (foam F: a complex of magnesium carbonate and a pulp fiber; foam G: a complex of a hydrotalcite and a pulp fiber).
(Foam H) A foam was obtained in the same manner as described for foam G except that the cationized CNF was replaced by the TEMPO-oxidized CNF.

(Strength of the foams)

The resulting foams were evaluated for their strength by the sense of touch. Specifically, the surface of each foam was pressed down to a depth of about 5 mm with a finger and the repulsive force was assessed using a three-level rating scale based on the following criteria.

○: The repulsive force is sensed and the shape of the foam is not deformed by pressing down.
Δ: The repulsive force is sensed to some extent but the shape of the foam is deformed by pressing down.
×: Little repulsive force is sensed and the shape of the foam is deformed by pressing down.

(Ash content of the foams)

The weight percentage of the inorganic matter (ash content) was calculated from the ratio between the weight of ash remaining after each foam was heated at 525 °C for about 2 hours and the original solids content (JIS P 8251: 2003).

(Density of the foams)

The weight of each foam was determined by subtracting the weight of the aluminum cup measured in advance from the weight of the aluminum cup containing the foam. The radius and thickness of the foam were measured to determine the volume, and the density was determined by dividing the weight of the foam by the volume.

[Table 1]

| Foam | Fiber complex | CNF | Strength of foam | Density (g/cm3) | Ash content (%) |
|---|---|---|---|---|---|
| B | Calcium carbonate/LBKP complex (Sample 1 of Experiment 1) | None | Δ | 0.02 | 53 |
| C | Calcium carbonate/LBKP complex (Sample 1 of Experiment 1) | Cationized CNF | ○ | 0.04 | 53 |
| D | Calcium carbonate/LBKP complex (Sample 1 of Experiment 1) | CM CNF | ○ | 0.05 | 53 |
| E | Calcium carbonate/LBKP complex (Sample 1 of Experiment 1) | TEMPO-oxidized CNF | ○ | 0.05 | 53 |
| F | Magnesium carbonate/LBKP complex (Sample 2 of Experiment 1) | Cationized CNF | ○ | 0.04 | 60 |
| G | Hydrotalcite/LBKP complex (Sample 3 of Experiment 1) | Cationized CNF | ○ | 0.04 | 50 |
| H | Hydrotalcite/LBKP complex (Sample 3 of Experiment 1) | TEMPO-oxidized CNF | ○ | 0.04 | 50 |

The table above shows that when a cellulose nanofiber (CNF) was added according to the present invention, the strength of the resulting foam was improved. The improvement of strength by the present invention can be mainly attributed to the fact that structural strength was conferred on the foam by the interactions between the CNF fibrils or the interactions between the pulp fiber or inorganic particles of the complex and the CNF fibrils (intermolecular interactions, hydrogen bonds, etc.).

Claims

1. A product comprising a fiber complex of a fiber and inorganic particles and assuming the form of an aqueous suspension, a pulp, a sheet, a powder, a microsphere, a granule, a pellet, a molding, a yarn, or a foam.

2. The product of claim 1, which is an aqueous suspension.

3. The product of claim 2, wherein the aqueous suspension has a percent moisture content of 90 % by mass or more and 99 % by mass or less.

4. The product of claim 1, which is a pulp.

5. The product of claim 4, wherein the pulp has a percent moisture content of 10 % by mass or more and less than 90 % by mass.

6. The product of claim 1, which is a sheet.

7. The product of claim 6, wherein the sheet has a percent moisture content of less than 10 % by mass.

8. The product of claim 6 or 7, wherein the sheet is a paper containing the complex.

9. The product of claim 1, which is a powder.

10. The product of claim 9, wherein the powder has an average particle size of less than 100 μm.

11. The product of claim 1, which is a microsphere.

12. The product of claim 11, wherein the microsphere has an average particle size of 100 μm or more and less than 1000 μm.

13. The product of claim 1, which is a granule.

14. The product of claim 13, wherein the granule has an average particle size of 1.0 mm or more and less than 10 mm.

15. The product of claim 1, which is a pellet.

16. The product of claim 15, wherein the pellet has a diameter of 10 mm or more and 50 mm or less.

17. The product of claim 1, which is a molding.

18. The product of claim 17, wherein the molding has a diameter of 5 cm or more and 100 cm or less.

19. The product of claim 1, which is a yarn.

20. The product of claim 19, wherein the yarn has a fiber diameter of 1 mm or more and 10 mm or less.

21. The product of claim 1, which is a foam.

22. The product of claim 21, wherein the foam has a density of 0.01 to 0.1 $g/cm^3$ or less.

23. The product of any one of claims 1 to 22, wherein the inorganic particles have an average primary particle size of 200 nm or less.

24. The product of any one of claims 6 to 8, wherein the inorganic particles are at least partially a metal salt of calcium, magnesium or barium.

25. The product of any one of claims 1 to 5, and 9 to 23, wherein the inorganic particles are at least partially a silicate, or a metal salt of aluminum, or metal particles including titanium, copper, silver, iron, manganese or zinc.

26. The product of any one of claims 1 to 25, wherein the fiber is a chemical fiber, a regenerated fiber or a natural fiber.

27. The product of claim 26, wherein the fiber is a wood-derived cellulose fiber.

28. The product of any one of claims 1 to 27, wherein the weight ratio between the fiber and the inorganic particles is 5/95 to 95/5.

29. A mixture comprising the product of any one of claims 1 to 28.

30. A process for preparing a product containing a complex of a fiber and inorganic particles, comprising the steps of:

   - synthesizing inorganic particles in a solution in the presence of a fiber to synthesize a complex of the fiber and the inorganic particles; and
   - adjusting the moisture content of the complex of the fiber and the inorganic particles.

31. The process of claim 30 for preparing an aqueous suspension containing a complex of a fiber and inorganic particles, wherein the step of adjusting the moisture content of the complex of the fiber and the inorganic particles comprises adjusting the percent moisture content to 90 % by mass or more and 99 % by mass or less.

32. The process of claim 30 for preparing a pulp containing a complex of a fiber and inorganic particles, wherein the step of adjusting the moisture content of the complex of the fiber and the inorganic particles comprises adjusting the percent moisture content to 10 % by mass or more and less than 90 % by mass.

33. The process of claim 30 for preparing a sheet containing a complex of a fiber and inorganic particles, wherein the step of adjusting the moisture content of the complex of the fiber and the inorganic particles comprises adjusting the percent moisture content to less than 10 % by mass.

34. A process for preparing a product containing a complex of a fiber and inorganic particles, comprising the steps of:

   - synthesizing inorganic particles in a solution in the presence of a fiber to synthesize a complex of the fiber and the inorganic particles; and
   - adjusting the particle size of the complex of the fiber and the inorganic particles.

35. The process of claim 34 for preparing a powder containing a complex of a fiber and inorganic particles, wherein the step of adjusting the particle size of the complex of the fiber and the inorganic particles comprises adjusting the average particle size of the complex of the fiber and the inorganic particles to less than 100 $\mu$m.

36. The process of claim 34 for preparing a microsphere containing a complex of a fiber and inorganic particles, wherein the step of adjusting the particle size of the complex of the fiber and the inorganic particles comprises adjusting the average particle size of the complex of the fiber and the inorganic particles to 100 $\mu$m or more and less than 1000 $\mu$m.

37. The process of claim 34 for preparing a granule containing a complex of a fiber and inorganic particles, wherein the step of adjusting the particle size of the complex of the fiber and the inorganic particles comprises adjusting the average particle size of the complex of the fiber and the inorganic particles to 1.0 mm or more and less than 10 mm.

38. A process for preparing a pellet containing a complex of a fiber and inorganic particles, comprising the steps of:

   - synthesizing inorganic particles in a solution in the presence of a fiber to synthesize a complex of the fiber and the inorganic particles; and
   - pelletizing the complex of the fiber and the inorganic particles.

39. The process of claim 38, comprising the step of adjusting the percent moisture content of the complex of the fiber and the inorganic particles to 45 % by mass or more and 80 % by mass or less by separating solids and liquids using a solid-liquid separator.

40. A process for preparing a molding containing a complex of a fiber and inorganic particles, comprising the steps of:

   - synthesizing inorganic particles in a solution in the presence of a fiber to synthesize a complex of the fiber and the inorganic particles; and
   - pouring the complex of the fiber and the inorganic particles into a mold and dehydrating it.

41. A process for preparing a yarn containing a complex of a fiber and inorganic particles, comprising the steps of:

   - synthesizing inorganic particles in a solution in the presence of a fiber to synthesize a complex of the fiber and the inorganic particles; and
   - subjecting the complex of the fiber and the inorganic particles to yarn formation.

42. The process of claim 41, comprising the step of slitting a sheet containing the complex of the fiber and the inorganic particles adjusted to a percent moisture content of less than 10 % by mass before the step of subjecting the complex of the fiber and the inorganic particles to yarn formation.

43. A process for preparing a foam containing a complex of a fiber and inorganic particles, comprising the steps of:

   - synthesizing inorganic particles in a solution in the presence of a fiber to synthesize a complex of the fiber and the inorganic particles; and
   - agitating the complex of the fiber and the inorganic particles using an agitator.

**44.** The process of claim 43, further comprising the step of drying bubbles formed.

# Fig. 1

# Fig. 2

# Fig. 3

# Fig. 4

# Fig. 5

# Fig. 6

# Fig. 7

# Fig. 8

# Fig. 9

Fig. 10

## INTERNATIONAL SEARCH REPORT

| | International application No. |
|---|---|
| | PCT/JP2017/042614 |

| A. CLASSIFICATION OF SUBJECT MATTER |
|---|
| Int. Cl.  D06M11/76(2006.01)i, C01F5/24(2006.01)i, C08L1/02(2006.01)i, D04H1/413(2012.01)i, D21H17/70(2006.01)i |
| According to International Patent Classification (IPC) or to both national classification and IPC |

| B. FIELDS SEARCHED |
|---|
| Minimum documentation searched (classification system followed by classification symbols) |
| Int. Cl.  D06M 11/76, C01F5/24, C08L1/02, D04H1/413, D21H17/70 |

Documentation searched other than minimum documentation to the extent that such documents are included in the fields searched

| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br><br>A | JP 2015-199655 A (NIPPON PAPER INDUSTRIES CO., LTD.)<br>12 November 2015, claims 1, 2, 6, 14, paragraphs [0017],<br>[0018], [0064], [0067], [0070] & US 2017/0107668 A1,<br>claims 1, 2, 6, 14, paragraph [0073] | 1-18, 23-40<br>19-22, 41, 43,<br>44<br>42 |
| X<br>Y<br><br>A | JP 2015-199660 A (NIPPON PAPER INDUSTRIES CO., LTD.)<br>12 November 2015, claims 1, 5, 6, paragraphs [0014],<br>[0017], [0045], [0057], [0069], [0073] & US 2017/0107668<br>A1, claims 1, 2, 6, 14, paragraph [0073] | 1-18, 23-40<br>19-22, 41, 43,<br>44<br>42 |

☒ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| | |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

30

**INTERNATIONAL SEARCH REPORT**

International application No.

PCT/JP2017/042614

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2006-503997 A (AMUREAL OSAKE UKYUCHUA URKINEN) 02 February 2006, claims 1, 6, 7, paragraphs [0014], [0031], [0033], [0051] & US 2006/0032596 A1, claims 1, 6, 7, paragraph [0021] | 1, 6-8, 24, 26-30, 33 |
| A | | 2-5, 9-23, 25, 31, 32, 34-44 |
| X | JP 2011-506789 A (OMYA DEVELOPMENT INC.) 03 March 2011, claims 1, 3, 44, 46, paragraphs [0002], [0022], [0050], [0076] & US 2010/0331457 A1, claims 1, 46, paragraph [0021] | 1-3, 6-8, 23, 24, 26-29 |
| A | | 4, 5, 9-22, 25, 30-44 |
| X | WO 2012/002390 A1 (KAO CORP.) 05 January 2012, claims 1, 3, paragraphs [0122], [0123], [0125] & US 2013/0142852 A1, claims 18, paragraphs [0156], [0157] | 1, 6, 7, 24-26, 28, 29 |
| A | | 2-5, 8-23, 27, 30-44 |
| Y | JP 2004-339650 A (TORAY INDUSTRIES, INC.) 02 December 2004, claims 1, 3 (Family: none) | 19, 20, 41 |
| Y | JP 2007-262145 A (TOSHIBA CORP.) 11 October 2007, claims 1, 3, paragraph [0015] & US 2007/0224149 A1, claims 1, 3, paragraph [0021] | 21, 22, 43, 44 |
| P, X | WO 2017/057154 A1 (NIPPON PAPER INDUSTRIES CO., LTD.) 06 April 2017, claims 1-13 & TW 201726779 A | 1-18, 23-40 |
| P, X | WO 2017/043580 A1 (NIPPON PAPER INDUSTRIES CO., LTD.) 16 March 2017, claims 1-22 (Family: none) | 1-18, 23-40 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012007247 A
- JP 6158585 A
- US 5679220 A
- JP 2005048351 A
- JP 60006619 A

**Non-patent literature cited in the description**

- Handbook of Cement, Gypsum and Lime. GIHODO SHUPPAN Co., Ltd, 1995, 495